# EUROPEAN PATENT APPLICATION

(11) **EP 4 675 754 A1**
(43) Date of publication of application: **07.01.2026**
(21) Application number: 24762832.4
(22) Date of filing: 19.02.2024
(51) Int. Cl.: H01M 10/54, C22B 7/00, C22B 26/12, C22B 1/00

(54) **BATTERY RECYCLING PROCESS**

(30) Priority: 28.02.2023 WO PCT/BR2023/050069
(71) Applicant: Tupy S.A., 89227-901 Joinville - SC (BR); Universidade de São Paulo - USP, 05508-220 São Paulo (BR)
(72) Inventor: CROCCE ROMANO ESPINOSA, Denise, 05386-330 São Paulo/SP (BR); ALBERTO SOARES TENÓRIO, Jorge, 01420-000 São Paulo/SP (BR); BARBOSA BOTELHO JUNIOR, Amilton, 05414-025 São Paulo/SP (BR); MARIÁH NUNES DE OLIVEIRA LIMA, Anastássia, 05586-001 São Paulo/SP (BR); DA SILVA VASCONCELOS, David, 05539-030 São Paulo (BR); MEDEIROS DE AQUINO SALES, Jeneson, 05590-000 São Paulo/SP (BR); ROVANI, Suzimara, 05360-030 São Paulo/SP (BR); DE MELO GONÇALVES DIAS, Maria Eduarda, 05586-001 São Paulo/SP (BR); HERGESSEL DE CASTRO, Roberta, 04546-003 São Paulo/SP (BR); ASSIS GOBO, Luciana, 89203-305 Joinville/SC (BR); AUGUSTO KUMOTO, Elio, 89203-430 Joinville/SC (BR)
(74) Representative: Maiwald GmbH
(86) International application number: PCT/BR2024/050059
(87) International publication number: WO 2024/178482

(57) **Abstract**

The present invention relates to a new recycling route for batteries used in the consumer electronics and automotive sectors. This invention encompasses batteries with different types of cathode active materials, such as LCO (LiCoO₂), NCA (LiNiCoAlO₂), LMO (LiMnO₂ or LiMn₂O₄), NMC (LiNiₓMn_{γ}Co_{z}O₂), and LMO-NMC (LiNiCoAlO₂-LiNiₓMn_{γ}Co_{z}O₂), in prismatic, cylindrical, and pouch formats. The process comprises the steps of: discharging the batteries, disassembling and separating battery components, grinding the battery cells, precipitating fluorine and lithium, acid leaching, separating manganese via ozonation, precipitating aluminum, extracting cobalt using solvents, precipitating nickel, and precipitating the remaining lithium. The present invention introduces an acid leaching step without the use of a reducing agent, which can achieve efficiencies close to 99% for Ni, Co, Mn, and Li, as well as mechanical processing without any thermal treatment to concentrate the metals of interest from the battery cathodes. The present invention further aims to provide a lithium-ion battery recycling process that employs a metal separation route via ozonation followed by electrodialysis, as well as a lithium-ion battery recycling process that utilizes a metal separation route via electrodialysis.

## Description

### TECHNICAL FIELD OF THE INVENTION

The present invention relates to a battery recycling process in the electronics and automotive sectors. More specifically, the present invention is directed to a hydrometallurgical process for recycling lithium-ion batteries of different cathode types (such as LCO (LiCoO₂), NCA (LiNiCoAlO₂), LMO (LiMnO₂ or LiMn₂O₄), NMC (LiNiₓMn_{y}Co_{z}O₂), and LMO-NMC (LiNiCoAlO₂-LiNiₓMn_{y}Co_{z}O₂)) in pouch, cylindrical, and prismatic formats.

### BACKGROUND OF THE INVENTION

Lithium-ion batteries (LIBs) are widely used in portable electronic devices and electric vehicles, as they can deliver high energy and power per unit of battery weight. However, the growing demand for the raw materials that make up these batteries may not be easily met, particularly in countries where the availability of such resources is limited. Furthermore, the improper disposal of spent LIBs can lead to serious environmental and safety concerns. Currently, the recovery of lithium and cobalt from primary and spent LIBs has become a critical topic for industries that produce or consume LIBs, as these metals are classified as critical raw materials by the European Union and as critical and strategic minerals by the United States of America, Brazil, Australia, and Canada. Thus, the recycling of spent LIBs is highly relevant from both environmental and economic perspectives. Consequently, LIB recycling can reduce reliance on the extraction of mineral resourcesespecially cobalt and nickel, which are scarce-and also contribute to the concepts of circular economy and sustainable development. Therefore, the recycling of LIBs has attracted widespread attention in recent years.

In general, there are two main routes for the recycling of LIBs. The first combines pyrometallurgy with subsequent hydrometallurgy, while the second combines mechanical processing-typically following thermal pretreatment-with metallurgical processing. Both routes present a series of advantages and disadvantages regarding human health, safety, and the environment, potential recovery rates of components, technical process requirements, and economic factors. Recycling processes are commonly focused on a single type of battery and include thermal processing steps. Lithium is recovered in only a few types of processes and with relatively low yield. The recovery of lower-value components such as graphite and manganese is technically feasible, but economically challenging.

A typical hydrometallurgical process consists of thermal pretreatment, acidic or alkaline leaching, separation, purification, and product recovery. Acid leaching is the most critical step, in which solid-liquid extraction occurs, and the metals are transferred into the aqueous phase.

Document US20210395859 relates to the leaching of NMC battery active material using sulfuric acid and sodium thiosulfate. It mentions the use of a reducing agent for leaching metals directly from the active material without prior physical processing. Document WO2022006469 uses sulfur dioxide gas as a reducing agent for metal leaching with sulfuric acid (at a higher concentration than in the process proposed in this patent). Document US20220136079A1 reports the use of citric acid and organic waste (fruit juices) as reducing agents. Xuan et al. (2021) evaluated the use of HCl as a leaching agent for the active materials of NMC batteries without physical processing of the batteries (grinding and sieving). However, although Xuan et al. (2021) did not use a reducing agent in the process, the gases released when using HCl are highly toxic and polluting, unlike sulfuric acid.

Furthermore, regarding the processing of batteries to be recycled in existing processes, saline solutions are commonly used to cause a short circuit in the battery, allowing subsequent grinding without explosions. Alternatively, inert gases (such as N₂, CO₂, and argon) may be used during the grinding stage.

Thus, there is a gap in the development of a lithium battery recycling process that is applicable to different types of batteries, specifically pouch, cylindrical, and prismatic, which is more environmentally friendly, cost-effective, and technically feasible.

### OBJECTIVES OF THE INVENTION

In this regard, the present invention aims to provide a battery recycling process, more specifically for lithium-ion batteries with different cathode types (such as LCO (LiCoO₂), NCA (LiNiCoAlO₂), LMO (LiMnO₂ or LiMn₂O₄), NMC (LiNiₓMn_{y}Co_{z}O₂), and LMO-NMC (LiNiCoAlO₂-LiNiₓMn_{y}Co_{z}O₂)) of pouch, cylindrical, and prismatic formats, which can be recycled simultaneously to meet the demands of the electronics and automotive markets.

Additionally, the present invention also aims to provide a lithium-ion battery recycling process that employs mechanical processing of the batteries without any form of thermal treatment, and that does not use a reducing agent during the leaching step.

Furthermore, the present invention also aims to provide a lithium-ion battery recycling process comprising a metal separation route by ozonation followed by electrodialysis, as well as a lithium-ion battery recycling process comprising a metal separation route by electrodialysis.

### SUMMARY OF THE INVENTION

The aspects and advantages of the invention will be set forth in part in the following description, may be apparent from the description, or may be learned through practice of the invention.

In a first embodiment, the battery recycling process of the present invention comprises the following steps:
- discharging the batteries to be recycled;
- disassembling and separating the components of the battery, wherein the components are grouped as: electronic parts and protective casing, and battery cells;
- grinding the lithium-ion battery cells, wherein the grinding is carried out in a cooling fluid;
- separating, from the ground material obtained in the grinding step, plastic parts containing graphite and active material, wherein the plastic parts are washed and sieved to separate the plastic from the graphite and active material, the latter two being sent to leaching, the sieve used having a mesh size between 0.1 mm and 4 mm;
- precipitating fluoride from the solution resulting from the separation step by adding Ca(OH)₂ or CaCl₂, wherein the precipitated fluoride is removed from the solution by filtration using a filter with pores ranging from 0.1 to 4 µm;
- precipitating lithium from the solution resulting from the fluoride precipitation step by adding Na₂CO₃, wherein the precipitated lithium is removed from the solution by filtration using a filter with pores ranging from 0.1 to 4 µm;
- acid leaching the solid resulting from the grinding and physical separation steps;
- filtering the leachate solution to separate the leach liquor from the solid material, using a filter with pores ranging from 0.1 to 4 µm;
- separating the solid material filtered in the previous step;
- treating the leach liquor from the previous step by ozonation to separate manganese, the manganese being separated by filtration in the form of manganese oxide, using a filter with pores ranging from 0.1 to 4 µm;
- precipitating aluminum from the solution resulting from the ozonation step by adding Na₂CO₃ or NaOH, wherein aluminum is precipitated in the form of aluminum oxide, aluminum hydroxide, or aluminum carbonate, and removed from the solution by filtration using a filter with pores ranging from 0.1 to 4 µm;
- extracting cobalt from the solution resulting from the aluminum precipitation step via solvent extraction in three sub-steps:
   ∘ using phosphinic acids, such as bis(2,4,4-trimethylpentyl)phosphinic acid, di-(2-ethylhexyl)phosphoric acid, trialkylphosphine, phosphonic or phosphinic acids, as extractants to form two phases, one aqueous and one organic,
   ∘ draining the aqueous phase, and
   ∘ sending the organic phase to a stripping solution with H₂SO₄, wherein cobalt is extracted in the form of cobalt sulfate and removed from the solution by filtration using a filter with pores ranging from 0.1 to 4 µm;
- precipitating nickel from the solution resulting from the cobalt solvent extraction step by adding Na₂CO₃ or NaOH, wherein nickel is precipitated in the form of nickel oxide, nickel hydroxide, or nickel carbonate and removed from the solution by filtration using a filter with pores ranging from 0.1 to 4 µm; and
- precipitating the remaining lithium from the solution resulting from the nickel precipitation step, wherein the remaining lithium is precipitated in the form of Li₂SO₄, Li₃PO₄, Li₂CO₃, or LiOH, and removed from the solution by filtration using a filter with pores ranging from 0.1 to 4 µm.

According to additional or alternative embodiments of the lithium-ion battery recycling process of the present invention, the following features, and their possible variants, may also be present, either individually or in combination:
- the process is applicable to LCO, NCA, NMC (111, 622, 532, 631, 811), LMO, and LMO-NMC batteries in prismatic, cylindrical, and pouch formats;
- the discharging step is performed in two sub-steps, wherein the electrical energy discharged from the batteries may be recovered;
- the discharging step is carried out by resistive means;
- the milling step is carried out using a shredder-type or knife-type mill;
- the milling step comprises the continuous addition of a cooling fluid, wherein the battery cells are inserted into the mill at intervals ranging from 1 to 20 seconds between each portion, and the milled material has a particle size of less than 50 mm;
- the cooling fluid used in the milling step is preferably water;
- the separation step is performed by at least one among decantation, centrifugation, or vibratory table;
- the sieve used has a mesh size between 1 mm and 2 mm;
- in the fluorine precipitation step, the addition of Ca(OH)₂ or CaCl₂ is performed in an amount between stoichiometric and 20% excess, with a reaction time of up to 2 hours and a temperature between 25°C and 90°C;
- in the lithium precipitation step, the addition of Na₂CO₃ is performed in an amount between stoichiometric and 20% excess, with a reaction time of up to 2 hours, a temperature between 20°C and 80°C, and a lithium precipitation yield of 10%;
- the acid used in the leaching step is selected from sulfuric acid, phosphoric acid, or citric acid;
- the leaching step is carried out in the absence of a reducing agent;
- the leaching step is conducted with an acid concentration ranging from 0.5 mol/L to 4.0 mol/L, preferably from 0.7 mol/L to 2 mol/L, at a temperature between 25°C and 90°C, preferably 60°C to 90°C, and a reaction time ranging from 0.5 to 5 hours, preferably 1 to 3 hours;
- the solid material filtered in the leached solution filtration step comprises graphite, remnants of the battery external structure, metallic copper foils, and metallic aluminum foils;
- the separation step is performed by at least one among decantation, centrifugation, vibratory table, screening, and elutriation;
- the sieve used in the preceding separation step has a mesh size between 0.03 mm and 4.0 mm;
- the sieve used in the preceding separation step has a mesh size between 1.5 mm and 3.0 mm;
- the elutriation in the separation step is carried out using a conventional elutriator;
- the ozonation step consists of the direct injection of ozone into the leach liquor exiting the leaching step to react with manganese ions, wherein the ozone is generated from a generator and oxygen source, and the step is carried out in batch reactors or in columns under continuous flow, with ozone gas flow rates between 0.2 L/min and 3.0 L/min, preferably between 0.6 L/min and 2.0 L/min, at a temperature between 10°C and 60°C, preferably between 15°C and 35°C;
- the aluminum precipitation step is performed at a pH range between 3.0 and 5.0, temperature between 25°C and 80°C, and a reaction time between 0.5 and 3.0 hours;
- the cobalt solvent extraction step is performed using phosphinic acid, in counter-current mode, with an aqueous-to-organic phase ratio between 1:5 and 5:1, a phosphinic acid concentration between 5% and 25% v/v, and a temperature between 25°C and 60°C, to obtain a cobalt sulfate solution;
- the nickel precipitation step is carried out at a pH range between 5.0 and 9.0, a temperature between 25°C and 80°C, and a reaction time between 0.5 and 3.0 hours;
- the remaining lithium precipitation step is carried out by one of the following methods:
   ∘ i) crystallizing the solution obtained from the nickel precipitation step at a temperature between 80°C and 110°C, with a reaction time between 1.0 and 5.0 hours, to obtain lithium sulfate (Li₂SO₄),
   ∘ ii) adding sodium phosphate (solid or in solution) to the solution under agitation, at a temperature between 25°C and 90°C, with a reaction time between 1.0 and 5.0 hours, to obtain lithium phosphate (Li₃PO₄),
   ∘ iii) adding sodium carbonate (solid or in solution) to the solution under agitation, at a concentration between 50 g/L and 200 g/L, with a temperature between 25°C and 90°C and a reaction time between 1.0 and 5.0 hours, to obtain lithium carbonate (Li₂CO₃); or
   ∘ iv) from the lithium carbonate obtained in step iii), adding calcium hydroxide at a concentration between 0.2 g/L and 1.0 g/L, with a temperature between 25°C and 90°C and a reaction time between 1.0 and 5.0 hours, to obtain lithium hydroxide (LiOH).
- a step of separating aluminum from the solution by electrodialysis using a cation exchange membrane, wherein the electrodialysis is carried out under an electric current in the range of 200 mA to 400 mA, with a current density between 1.0 mA/cm² and 31.25 mA/cm², and a reaction time of up to 30 hours, and wherein the aluminum-enriched solution proceeds to an aluminum precipitation step and the remaining solution proceeds to a cobalt solvent extraction step;
- adding sodium oxalate (Na₂C₂O₄) or oxalic acid (H₂C₂O₄), in an amount ranging from the stoichiometric quantity up to a 20% excess, to the cobalt sulfate solution obtained from the cobalt solvent extraction step to precipitate cobalt oxalate in a 1:1 proportion, and subsequently:
   ∘ subjecting the solution containing cobalt oxalate to a calcination step between 400°C and 800°C to obtain cobalt oxide and, optionally, adding Na₂CO₃ (in a stoichiometric amount or up to a 20% excess), in a pH range from 6.0 to 10.0, with a reaction time between 0.5 and 3.0 hours, at a temperature between 25°C and 80°C, to obtain cobalt carbonate; or
   ∘ subjecting the solution to electrolysis to obtain cobalt in metallic form,
   ∘ wherein cobalt oxide, cobalt carbonate, and metallic cobalt are removed from the solution through filtration, using a filter with pore sizes ranging from 0.1 to 4 µm;
- for the filtration step to remove cobalt oxide, cobalt carbonate, and metallic cobalt from the solution, a filter with pore sizes from 1 to 2 µm is used;
- after the residual lithium precipitation step, the solution is subjected to a crystallization step to obtain sodium sulfate crystals, and the acid used in the leaching step is recovered and returned to said leaching step;
- in the steps of fluorine precipitation, lithium precipitation, leaching, filtration of the leachate solution, ozonation, aluminum precipitation, cobalt solvent extraction, nickel precipitation, and residual lithium precipitation, filters with pore sizes between 1 and 2 µm are used;
- the filters used are of the paper or membrane type.

In an alternative embodiment, the battery recycling process of the present invention does not comprise an ozonation step for the separation of manganese, wherein the manganese is separated together with cobalt in a solvent extraction step. This alternative embodiment of the invention comprises the following steps:
- discharging the batteries to be recycled;
- disassembling and separating the components of the battery, wherein the components are grouped as: electronic parts and protective casing, and the battery cells;
- grinding the battery cells, wherein the grinding is performed in a cooling fluid;
- separating, from the ground material obtained in the grinding step, plastic parts with graphite and active material, wherein the plastic parts with graphite and active material are washed and screened to separate the graphite and active material, the graphite and active material being directed to leaching, and the screen used with a mesh size between 0.1 mm and 4 mm;
- precipitating fluorine from the solution obtained in the separation step by adding Ca(OH)₂ or CaCl₂, wherein the precipitated fluorine is removed from the solution by filtration, using a filter with pore sizes between 0.1 µm and 4 µm;
- precipitating lithium from the solution obtained from the fluorine precipitation step by adding Na₂CO₃, wherein the precipitated lithium is removed from the solution by filtration, using a filter with pore sizes between 0.1 µm and 4 µm;
- acid leaching the solid material obtained from the grinding and physical separation step;
- filtering the leached solution to separate the leach liquor and solid material, using a filter with pore sizes between 0.1 µm and 4 µm;
- separating the solid material filtered in the leaching step;
- precipitating aluminum from the solution obtained in the leaching step by adding Na₂CO₃ or NaOH, wherein the aluminum is precipitated in the form of aluminum oxide, aluminum hydroxide, or aluminum carbonate, and removed from the solution by filtration, using a filter with pore sizes between 0.1 µm and 4 µm;
- extracting cobalt and manganese by solvent extraction from the solution obtained in the aluminum precipitation step in six sub-steps:
   ∘ extracting cobalt and manganese from the solution using phosphinic acids such as bis(2,4,4-trimethylpentyl)phosphinic acid, di-(2-ethylhexyl)phosphoric acid, trialkyl phosphine, phosphonic or phosphinic acids, generating two phases, one aqueous and one organic, the aqueous phase being drained
   ∘ stripping cobalt and manganese from the organic phase of the previous sub-step using H₂SO₄, wherein cobalt is recovered as cobalt sulfate and manganese is recovered as manganese sulfate in the aqueous phase,
   ∘ extracting manganese from the solution obtained in the previous sub-step using phosphinic acids such as bis(2,4,4-trimethylpentyl)phosphinic acid, di-(2-ethylhexyl)phosphoric acid, trialkyl phosphine, phosphonic or phosphinic acids, generating two phases, one aqueous containing cobalt and one organic containing manganese, the aqueous phase containing cobalt being directed to cobalt precipitation,
   ∘ stripping manganese from the organic phase of the solution of the previous sub-step using H₂SO₄, wherein manganese is recovered in the aqueous phase as manganese sulfate, and
   ∘ precipitating manganese from the aqueous phase of the previous sub-step using one of the agents Na₂CO₃, NaOH, Na₂C₂O₄, or H₂C₂O₄, wherein manganese is precipitated as manganese hydroxide, manganese oxalate, or manganese carbonate and removed from the solution by filtration using a filter with pore sizes between 0.1 µm and 4 µm,
   ∘ precipitating cobalt from the aqueous phase of the solution of the manganese solvent extraction sub-step using one of the agents Na₂CO₃, C₂H₂O₄ (oxalic acid), Na₂C₂O₄ (sodium oxalate), or NaOH, wherein cobalt is precipitated as cobalt hydroxide, cobalt oxalate, or cobalt carbonate and removed from the solution by filtration using a filter with pore sizes between 0.1 µm and 4 µm;
- precipitating nickel from the solution obtained in the cobalt and manganese solvent extraction step by adding Na₂CO₃ or NaOH, wherein nickel is precipitated as nickel oxide, nickel hydroxide, or nickel carbonate and removed from the solution by filtration, using a filter with pore sizes between 0.1 µm and 4 µm; and
- precipitating residual lithium from the solution obtained in the nickel precipitation step, wherein the residual lithium is precipitated in the form of Li₂SO₄, Li₃PO₄, Li₂CO₃, or LiOH, and removed from the solution by filtration, using a filter with pore sizes between 0.1 µm and 4 µm.

According to additional or alternative embodiments of the alternative implementation of the battery recycling process of the present invention, the following features, and their possible variants, may also be present, either alone or in combination:
- a step of aluminum separation from the solution by electrodialysis with a cation-exchange membrane, wherein the electrodialysis is carried out with an electric current in the range of 200 mA to 400 mA, a current density of 1.0 mA/cm² to 31.25 mA/cm², and a reaction time of up to 30 hours, and wherein the aluminum-concentrated solution proceeds to the aluminum precipitation step, and the remaining solution proceeds to the step of cobalt and manganese extraction by solvent extraction;
- the solvent extraction sub-steps are performed in a temperature range between 25°C and 60°C, in counter-current flow, with an aqueous-to-organic phase ratio between 1:5 and 5:1, and a phosphinic acid concentration between 5% and 25% v/v;
- the back-extraction sub-steps are carried out in a temperature range between 25°C and 60°C, in counter-current flow, with an aqueous-to-organic phase ratio between 1:5 and 5:1, and sulfuric acid concentration between 0.1 mol/L and 5.0 mol/L;
- the manganese and cobalt precipitation sub-steps are performed with the addition of reagents in amounts ranging from the stoichiometric quantity to a 20% excess, at a pH range between 6.0 and 10.0, a reaction time between 0.5 and 3.0 hours, and a temperature between 25°C and 80°C;
- the manganese oxalate and cobalt oxalate undergo a calcination step, at a temperature between 400°C and 800°C, to obtain cobalt oxide and manganese oxide.

The process for resynthesizing the cathode active materials of the batteries may be carried out either from the materials after separation or directly from the leachate obtained in the leaching step. The cathode materials that may be synthesized directly from the leachate include NCA, LMO, LCO, NMC, and LMO-NMC.

The direct resynthesis process from the leachate may be performed by coprecipitation with NH₄HCO₃ and Na₂CO₃ for 0.5 to 12 hours at a temperature ranging from 25°C to 90°C. The resulting solid is then subjected to a heat treatment at 200°C to 500°C for 0.5 to 12 hours in an air or inert atmosphere, followed by a calcination step at 600°C to 800°C for 0.5 to 12 hours in an inert, air, or oxygen atmosphere.

In an alternative embodiment, the battery recycling process of the present invention, following the acid leaching and filtration steps of the preceding embodiments, separates the metals through ozonation followed by electrodialysis. This alternative embodiment of the invention comprises the following steps:
- discharging the batteries to be recycled;
- disassembling and separating the components of the battery, wherein the components are grouped as: electronic parts and protective structure, in addition to the battery cells;
- grinding the lithium-ion battery cells, wherein said grinding is performed in a cooling fluid;
- separating, from the ground material resulting from the grinding step, plastic parts containing graphite and active material, wherein said plastic parts containing graphite and active material are washed and sieved for separation of graphite and active material, the graphite and active material being directed to a leaching step, and the sieve employed has a mesh size between 0.1 mm and 4 mm;
- precipitating fluorine from the solution resulting from the separation step by addition of Ca(OH)₂ or CaCl₂, wherein the precipitated fluorine is removed from the solution via filtration (116), using a filter with pores of 0.1 µm to 4 µm;
- precipitating lithium from the solution resulting from the fluorine precipitation step by addition of Na₂CO₃, wherein the precipitated lithium is removed via filtration, using a filter with pores of 0.1 µm to 4 µm;
- acid leaching of the solid obtained from the grinding and physical separation step;
- filtering the leachate solution to separate leach liquor and solid material, using a filter with pores of 0.1 µm to 4 µm;
- separating the solid material filtered in the previous step;
- treating the leach liquor from the previous step via ozonation for manganese separation, wherein manganese is separated by filtration in the form of manganese oxide, using a filter with pores of 0.1 µm to 4 µm, or separated via precipitation using precipitating agents such as sodium hypochlorite, or via electrodeposition (in oxide form);
- subjecting the solution resulting from the ozonation step to lithium separation via electrodialysis using a monovalent membrane, wherein said electrodialysis is conducted at an electric current between 10 mA and 400 mA, preferably between 10 mA and 70 mA, with a current density from 0.1 mA/cm² to 25 mA/cm², preferably 12.5 mA/cm² to 25 mA/cm², and a reaction time from 20 h to 160 h, preferably up to 30 h, wherein the lithium-enriched solution proceeds to a lithium recovery step via precipitation, and the remaining solution proceeds to a subsequent electrodialysis step;
- subjecting the solution obtained from the lithium separation step to complexation with ethylenediaminetetraacetic acid (EDTA), followed by nickel separation via electrodialysis using a cation-exchange membrane in a system comprising cation and anion exchange membranes, wherein said electrodialysis is carried out at electric current from 100 mA to 500 mA, preferably from 200 mA to 400 mA, current density from 1.0 mA/cm² to 31.25 mA/cm², preferably from 12.5 mA/cm² to 25 mA/cm², with a reaction time of 20 h to 160 h, preferably up to 30 h, and wherein the nickel-enriched solution proceeds to a nickel recovery step via precipitation or electrodeposition (in metallic form), and the remaining solution proceeds to a new electrodialysis step; and
- subjecting the solution from the nickel separation step to complexation with 1-hydroxyethane-1,1-diphosphonic acid (HEDP), followed by cobalt and aluminum separation via electrodialysis using a cation-exchange membrane, in a system comprising cation and anion exchange membranes, wherein electrodialysis is conducted at electric current from 100 mA to 500 mA, preferably from 200 mA to 400 mA, with current density from 1.0 mA/cm² to 31.25 mA/cm², preferably from 12.5 mA/cm² to 25 mA/cm², and reaction time from 20 h to 160 h, preferably up to 30 h, thereby yielding two distinct solutions that proceed to respective recovery steps by precipitation or electrodeposition of cobalt (in metallic form) and aluminum (in metallic form).

According to additional or alternative embodiments of the battery recycling process of the present invention, the following features, and their possible variants, may also be present, either alone or in combination:
- the process is applicable to batteries that contain manganese or, in the absence of manganese, may be performed without ozonation. Example batteries include those selected from the group consisting of NMC (111, 622, 532, 631, 811), LMO, LMO-NMC and NCA, of prismatic, cylindrical and/or pouch types;
- the discharging step may be performed in two sub-steps, allowing for recovery of the electrical energy discharged from the batteries;
- the discharging step may be performed using resistive load;
- the grinding step may be performed using a shredder or knife-type mill;
- the grinding step includes continuous addition of cooling fluid, with battery cells being introduced into the mill at intervals of 1 to 20 seconds, and the ground material having particle size below 50 mm;
- the cooling fluid used in the grinding step is preferably water;
- the separation step is performed using at least one of: decantation, centrifugation, vibrating table;
- the sieve employed has a mesh size between 1 mm and 2 mm;
- in the fluorine precipitation step, the amount of Ca(OH)₂ or CaCl₂ added ranges from stoichiometric to 20% excess, with a reaction time up to 2 hours and a temperature between 25°C and 90°C;
- in the lithium precipitation step, the Na₂CO₃ amount is added in stoichiometric to 20% excess, with a reaction time up to 2 hours, temperature between 20°C and 80°C, and lithium precipitation yield of 10%;
- the acid used in the leaching step is selected from sulfuric acid, phosphoric acid or citric acid;
- the leaching step is performed in the absence of a reducing agent;
- the leaching step employs acid concentrations ranging from 0.5 mol/L to 4.0 mol/L, preferably from 0.7 mol/L to 2 mol/L, at temperatures between 25°C and 90°C, preferably 60°C to 90°C, with reaction times from 0.5 to 5 hours, preferably 1 to 3 hours;
- the solid material filtered from the leached solution comprises graphite, external battery casing remnants, metallic copper foils, and metallic aluminum foils;
- the separation step is performed using at least one of: decantation, centrifugation, vibrating table, sieving, and elutriation;
- the sieve used in the previous separation step has a mesh size between 0.03 mm and 4.0 mm;
- preferably, the sieve has a mesh size between 1.5 mm and 3.0 mm;
- elutriation is conducted in a conventional elutriator;
- the ozonation step consists of direct injection of ozone into the leachate to react with manganese ions, wherein ozone is generated from an oxygen-fed generator, and the step is performed in batch reactors or continuous column systems, with gas flow rates from 0.2 L/min to 3.0 L/min, preferably 0.6 L/min to 2.0 L/min, and at temperatures between 10°C and 60°C, preferably 15°C to 35°C;
- lithium is precipitated in the form of Li₂SO₄, Li₃PO₄, Li₂CO₃ or LiOH, and removed by filtration with a filter having pores of 0.1 µm to 4 µm;
- lithium precipitation is performed by one of the following methods:
   ∘ i) crystallization at 80°C to 110°C for 1.0 to 5.0 hours to obtain lithium sulfate (Li₂SO₄);
   ∘ ii) addition of sodium phosphate (solid or solution) under agitation at 25°C to 90°C for 1.0 to 5.0 hours to obtain lithium phosphate (Li₃PO₄);
   ∘ iii) addition of sodium carbonate (solid or solution) at concentrations of 50 g/L to 200 g/L, temperature of 25°C to 90°C, for 1.0 to 5.0 hours to obtain lithium carbonate (Li₂CO₃);
   ∘ iv) converting lithium carbonate from method iii) to lithium hydroxide (LiOH) by adding calcium hydroxide at concentrations from 0.2 g/L to 1.0 g/L, at 25°C to 90°C for 1.0 to 5.0 hours;
- nickel is precipitated by addition of Na₂CO₃ or NaOH, forming nickel oxide, nickel hydroxide, or nickel carbonate, and removed by filtration with a filter having pores from 0.1 µm to 4 µm;
- nickel precipitation is performed at pH between 5.0 and 9.0, temperature of 25°C to 80°C, for 0.5 to 3.0 hours;
- aluminum is precipitated by addition of Na₂CO₃ or NaOH, forming aluminum oxide, aluminum hydroxide, or aluminum carbonate, and removed via filtration using a filter with pores from 0.1 µm to 4 µm;
- aluminum precipitation is carried out at pH between 3.0 and 5.0, temperature between 25°C and 80°C, for 0.5 to 3.0 hours;
- cobalt is precipitated by addition of Na₂CO₃ at pH 6 to 10, reaction time from 30 minutes to 3 hours, and at 25°C. Filtration is performed using a 2 µm filter;
- electrodeposition of nickel (in metallic form) is carried out using methods known to persons skilled in the art;
- electrodeposition of manganese (in oxide form) is performed using known techniques;
- electrodeposition of cobalt (in metallic form) is conducted in an electrolysis cell at a voltage of 2 to 4 V, current density of 60 to 400 A/m², temperature of 40°C to 70°C, pH adjusted between 2 and 5, initial cobalt concentration above 9 g/L, final cobalt concentration between 4 and 6 g/L;
- electrodeposition of aluminum (in metallic form) is carried out using known procedures;
- following lithium precipitation, the solution may undergo crystallization to obtain sodium sulfate crystals, and the acid used in leaching is recovered for reuse;
- in the steps of fluorine precipitation, lithium precipitation, leaching, leachate filtration, ozonation, aluminum precipitation, cobalt precipitation, nickel precipitation, and lithium precipitation, filters with pores between 1 µm and 2 µm are employed;
- the filters used are of the paper or membrane type.

In another alternative embodiment, the battery recycling process of the present invention, after the acid leaching and filtration steps of the first and second embodiments, does not include an ozonation step and separates all metals by electrodialysis. This alternative embodiment of the invention comprises the following steps:
- discharging the batteries to be recycled;
- disassembling and separating the components of the battery, wherein the components are grouped as: electronic parts and protective structure, in addition to the battery cells;
- grinding the lithium-ion battery cells, wherein the grinding is carried out in a cooling fluid;
- separating, from the ground material resulting from the grinding step, plastic parts with graphite and active material, wherein the plastic parts with graphite and active material are washed and sieved for the separation of graphite and active material, the graphite and active material proceed to leaching, and the sieve used has a mesh between 0.1 mm and 4 mm;
- precipitating fluorine from the solution obtained in the separation step by the addition of Ca(OH)₂ or CaCl₂, wherein the precipitated fluorine is removed from the solution by filtration, using a filter with pore size from 0.1 µm to 4 µm;
- precipitating lithium from the solution obtained in the fluorine precipitation step by the addition of Na₂CO₃, wherein the precipitated lithium is removed from the solution by filtration, using a filter with pore size from 0.1 µm to 4 µm;
- leaching with acid the solid obtained from the grinding and physical separation step;
- filtering the leach solution to separate leach liquor and solid material, using a filter with pore size from 0.1 µm to 4 µm;
- separating the solid material filtered in the previous step;
- subjecting the leach liquor from the previous step to a lithium separation step by electrodialysis using a monovalent membrane, wherein the electrodialysis is carried out at a current range from 10 mA to 400 mA, preferably from 10 mA to 70 mA, with current density from 0.1 mA/cm² to 25 mA/cm², preferably from 12.5 mA/cm² to 25 mA/cm², and a reaction time from 20 h to 160 h, preferably up to 30 h, wherein the lithium-enriched solution proceeds to a lithium recovery step by precipitation, and the remaining solution proceeds to a new electrodialysis step;
- subjecting the solution from the lithium separation step to complexation with ethylenediaminetetraacetic acid (EDTA), followed by a nickel separation step by electrodialysis using a cation-exchange membrane, in a system comprising cationic and anionic membranes, wherein the electrodialysis is carried out at a current range from 100 mA to 500 mA, preferably from 200 mA to 400 mA, with current density from 1.0 mA/cm² to 31.25 mA/cm², preferably from 12.5 mA/cm² to 25 mA/cm², and reaction time from 20 h to 160 h, preferably up to 30 h, wherein the nickel-enriched solution proceeds to a nickel recovery step by precipitation or electrodeposition (in metallic form), and the remaining solution proceeds to a new electrodialysis step;
- subjecting the solution from the nickel separation step to complexation with ethylenediaminetetraacetic acid (EDTA), followed by a manganese separation step by electrodialysis using a cation-exchange membrane, in a system comprising cationic and anionic membranes, wherein the electrodialysis is carried out at a current range from 100 mA to 500 mA, preferably from 200 mA to 400 mA, with current density from 1.0 mA/cm² to 31.25 mA/cm², preferably from 12.5 mA/cm² to 25 mA/cm², and reaction time from 20 h to 160 h, preferably up to 30 h, wherein the manganeseenriched solution proceeds to a manganese recovery step by precipitation or electrodeposition (in the form of oxide), and the remaining solution proceeds to a new electrodialysis step; and
- subjecting the solution from the manganese separation step to complexation with 1-hydroxyethane-1,1-diphosphonic acid, followed by a cobalt and aluminum separation step by electrodialysis using a cation-exchange membrane, in a system comprising cationic and anionic membranes, wherein the electrodialysis is carried out at a current range from 100 mA to 500 mA, preferably from 200 mA to 400 mA, with current density from 1.0 mA/cm² to 31.25 mA/cm², preferably from 12.5 mA/cm² to 25 mA/cm², and reaction time from 20 h to 160 h, preferably up to 30 h, and two distinct solutions are obtained that proceed to recovery steps by precipitation or electrodeposition of cobalt (in metallic form) and precipitation or electrodeposition of aluminum (in metallic form).

According to further or alternative embodiments of the battery recycling process of the present invention, the following features, and their possible variations, may also be present, either individually or in combination:
- the process is applicable to batteries that contain manganese in their composition, or even without ozonation if manganese is not present. Examples include batteries selected from the group consisting of NMC (111, 622, 532, 631, 811), LMO, LMO-NMC and NCA, with cell types being prismatic, cylindrical, and/or pouch;
- the discharge step is carried out in two sub-steps, making it possible to recover the electrical energy discharged from the batterie;
- the discharge step is performed by means of resistance;
- the comminution step is carried out in a shredder or knife-type mill;
- the comminution step includes continuous addition of a cooling fluid, battery cells are fed into the mill at intervals of 1 to 20 seconds between each part, and the ground material has a particle size below 50 mm;
- the cooling fluid in the comminution step is preferably water;
- the separation step is performed by at least one of sedimentation, centrifugation, or a vibrating table;
- the screen used has a mesh size between 1 and 2 mm;
- in the fluorine precipitation step, the addition of Ca(OH)₂ or CaCl₂ is in an amount between the stoichiometric and 20% excess, with a reaction time of up to 2 hours and a temperature between 25°C and 90°C;
- in the lithium precipitation step, the amount of Na₂CO₃ added is between stoichiometric and 20% excess, with a reaction time of up to 2 hours, a temperature from 20°C to 80°C, and a lithium precipitation yield of 10%;
- the acid used in the leaching step is one selected from sulfuric acid, phosphoric acid, or citric acid;
- the leaching step is carried out without the presence of a reducing agent;
- the acid concentration in the leaching step may range from 0.5 mol/L to 4.0 mol/L, preferably from 0.7 mol/L to 2 mol/L, with a temperature between 25°C and 90°C, preferably between 60°C and 90°C, and a reaction time of 0.5 to 5 hours, preferably from 1 to 3 hours;
- the solid material filtered in the leached solution filtration step comprises graphite, battery casing residues, metallic copper foil, and metallic aluminum foil;
- the separation step is carried out by at least one of sedimentation, centrifugation, vibrating table, screening, and elutriation;
- the screen used in the above separation step has a mesh size between 0.03 and 4.0 mm;
- the screen used in the above separation step has a mesh size between 1.5 and 3.0 mm;
- the elutriation in the separation step is carried out in a conventional elutriator;
- lithium is precipitated in the form of Li₂SO₄, Li₃PO₄, Li₂CO₃, or LiOH, and removed from the solution by filtration using a filter with pores of 0.1 to 4 µm;
- the lithium precipitation step is carried out by one of the following methods:
   ∘ I) crystallizing the solution at a temperature of 80°C to 110°C, for 1.0 to 5.0 hours, to obtain lithium sulfate (Li₂SO₄);
   ∘ ii) adding sodium phosphate (solid or in solution) to the solution under stirring, at a temperature of 25°C to 90°C, for 1.0 to 5.0 hours, to obtain lithium phosphate (Li₃PO₄);
   ∘ iii) adding sodium carbonate (solid or in solution) to the solution under stirring, at a concentration of 50 g/L to 200 g/L, at a temperature of 25°C to 90°C, for 1.0 to 5.0 hours, to obtain lithium carbonate (Li₂CO₃); or
   ∘ iv) from the lithium carbonate obtained in item iii), adding calcium hydroxide at a concentration of 0.2 g/L to 1.0 g/L, at a temperature of 25°C to 90°C, for 1.0 to 5.0 hours, to obtain lithium hydroxide (LiOH);
- nickel is precipitated from the solution by adding Na₂CO₃ or NaOH, where nickel is precipitated in the form of nickel oxide, nickel hydroxide, or nickel carbonate, and removed from the solution by filtration using a filter with pores of 0.1 to 4 µm;
- the nickel precipitation step is carried out at a pH range of 5.0 to 9.0, temperature of 25°C to 80°C, and reaction time of 0.5 to 3.0 hours;
- the manganese precipitation step is carried out using ozone, which may occur in batch reactors or columns in a continuous system, with gas flow rates of 0.2 L/min to 4.0 L/min, preferably 0.6 L/min to 2.0 L/min, at a temperature range of 10°C to 60°C, preferably 15°C to 35°C, resulting in MnO₂ precipitation;
- aluminum is precipitated by addition of Na₂CO₃ or NaOH, where aluminum is precipitated in the form of aluminum oxide, aluminum hydroxide, or aluminum carbonate, and removed from the solution by filtration using a filter with pores of 0.1 to 4 µm;
- the aluminum precipitation step is carried out at a pH range of 3.0 to 5.0, temperature of 25°C to 80°C, and reaction time of 0.5 to 3.0 hours;
- the cobalt precipitation step is carried out by adding Na₂CO₃ at pH 6 to 10, for 30 minutes to 3 hours, at a temperature of 25°C. Filtration is carried out using a 2 µm filter to retain the solid phase (cobalt salt/product);
- the nickel electrodeposition step (in metallic form) is carried out by procedures known to those skilled in the art;
- the manganese electrodeposition step (in oxide form) is carried out by procedures known to those skilled in the art;
- the cobalt electrodeposition step (in metallic form) is operated in an electrodeposition cell with a potential difference between the cathode and anode of 2 to 4 V, current density of 60 to 400 A/m², temperature of 40°C to 70°C, liquor with pH adjusted to 2 to 5, initial cobalt concentration above 9 g/L, and final concentration between 4 and 6 g/L;
- the aluminum electrodeposition step (in metallic form) is carried out by procedures known to those skilled in the art;
- after the lithium precipitation step, the solution undergoes a crystallization step to obtain sodium sulfate crystals, and the acid used in leaching is recovered for reuse in the leaching step;
- in the fluorine precipitation, lithium precipitation, leaching, leached solution filtration, aluminum precipitation, cobalt precipitation, nickel precipitation, manganese precipitation, and remaining lithium precipitation steps, the filter used has pores between 1 and 2 µm;
- the filters used are of the paper or membrane types.

The process for resynthesizing the active cathode materials of the batteries can be carried out either from the materials after separation or directly from the leaching liquor. The cathodes that can be synthesized directly from the leaching liquor include NCA, LMO, LCO, NMC, and LMO-NMC.

The direct resynthesis process from the leaching liquor can be carried out by co-precipitation using NH₄HCO₃ and Na₂CO₃ for 0.5 to 12 hours at a temperature between 25°C and 90°C. The resulting solid is then subjected to a heat treatment at 200°C to 500°C for 0.5 to 12 hours in an air or inert atmosphere, followed by a calcination step at 600°C to 800°C for 0.5 to 12 hours in an inert, air, or oxygen atmosphere.

### BRIEF DESCRIPTION OF THE FIGURES

A complete and enabling disclosure of the present invention, including the best mode thereof, directed to a person having ordinary skill in the art, is presented in the detailed description, which makes reference to the attached figures, in which:
- Figure 1 illustrates a flowchart of a first embodiment of the battery recycling process of the present invention;
- Figure 2 illustrates a flowchart of a second embodiment of the battery recycling process of the present invention;
- Figure 3 illustrates a flowchart of a third embodiment of the battery recycling process of the present invention;
- Figure 4 illustrates a flowchart of a fourth embodiment of the battery recycling process of the present invention;
- Figure 5 illustrates a flowchart of the cobalt and manganese solvent extraction step as shown in the flowcharts of Figures 3 and 4;
- Figure 6 illustrates a flowchart of the ozonation and electrodialysis steps for metal separation occurring after the acid leaching and filtration steps shown in Figures 1 to 4; and
- Figure 7 illustrates a flowchart of the electrodialysis steps for metal separation occurring after the acid leaching and filtration steps shown in Figures 1 to 4.

### DETAILED DESCRIPTION OF THE INVENTION

Detailed reference will now be made to embodiments of the invention, with one or more examples thereof being illustrated in the drawings. Each example is provided by way of explanation of the invention, without limiting the invention. In fact, it will be apparent to those skilled in the art that various modifications and variations can be made to the present invention without departing from the scope or spirit of the invention. For example, functions illustrated or described as part of some embodiments may be used in conjunction with other embodiments to yield additional embodiments. Accordingly, the present invention is intended to cover such modifications and variations as fall within the scope of the appended claims and their equivalents.

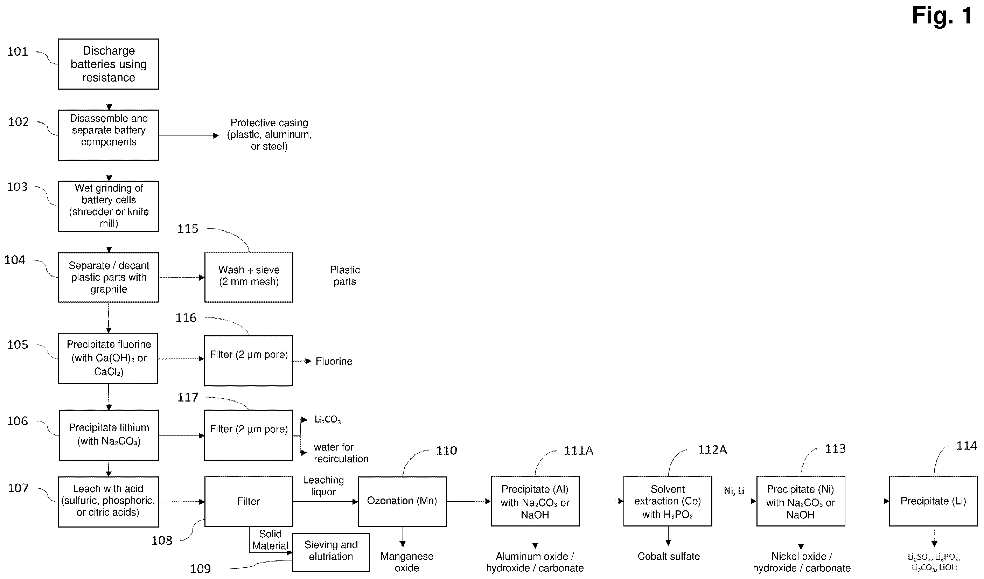

In general, as shown in Figure 1, the battery recycling process 100 comprises the following steps: discharging the batteries 101 to be recycled, wherein the discharge may be performed, for example, via resistance; disassembling and separating the battery components 102, wherein the components are grouped as: electronic parts and protective casing, and battery cells; grinding the battery cells 103, wherein the grinding is performed in a coolant fluid-e.g., to a particle size of 1 to 2 mm-using a shredder- or knife-type mill; separating 104 the ground material from the grinding step, to isolate plastic parts (made of polypropylene and high- or low-density polyethylene) along with graphite and active material, by means of at least one of sedimentation, centrifugation, or vibrating table, wherein the plastic parts with graphite and active material are washed with continuous water addition and sieved 115 to separate the remaining graphite and active material. The sieve mesh is between 0.1 and 4 mm, preferably between 1 and 2 mm; precipitating fluorine 105 from the solution obtained in step 104 by adding Ca(OH)₂ or CaCl₂, wherein the precipitated fluorine is removed by filtration 116 using a filter with pores of 0.1 to 4 µm; precipitating lithium 106 from the solution resulting from step 105 by adding Na₂CO₃, wherein the precipitated lithium is removed by filtration 117 using a filter with pores of 0.1 to 4 µm. As can be seen, the batteries to be recycled are mechanically processed in a coolant fluid-e.g., water-without any thermal treatment prior to leaching. Subsequently, the following steps are performed: leaching 107 the solid resulting from the grinding and physical separation steps, using an acid selected from sulfuric, phosphoric, or citric acid; filtering the leachate 108 to separate leach liquor and solid material, the solid material comprising graphite, battery casing remnants, metallic copper foil, and metallic aluminum foil, using a filter with pores of 0.1 to 4 µm; separating the filtered solid 109 from step 108, for example using at least one of sedimentation, centrifugation, vibrating table, sieving, and elutriation. Additionally, step 109 uses a sieve with a mesh between 0.03 and 4.0 mm, preferably between 1.5 and 3.0 mm; elutriation is performed using a conventional elutriator. The leach liquor is treated by ozonation 110 for manganese separation. The ozonation process consists of injecting ozone into the leach liquor output from step 108 to increase the redox potential of the solution and precipitate manganese. The ozone is generated from a generator and oxygen source and injected directly into the solution to react with manganese ions. After ozonation 110, manganese is separated by filtration as manganese oxide, using a filter with pores of 0.1 to 4 µm; precipitating aluminum 111A from the solution obtained from ozonation step 110 by adding Na₂CO₃ or NaOH, wherein the aluminum is precipitated as aluminum oxide, hydroxide, or carbonate, and removed from solution by filtration with a filter of 0.1 to 4 µm pore size. Solvent extraction of cobalt 112A from the solution obtained in aluminum precipitation step 111A is performed in three sub-steps: a) using phosphinic acids (e.g., bis(2,4,4-trimethylpentyl)phosphinic acid, di(2-ethylhexyl)phosphoric acid, trialkyl phosphine, phosphonic acid, or phosphinic acid) as extractants to form two phases: an aqueous and an organic phase; b) draining the aqueous phase; and c) transferring the organic phase to a stripping solution with H₂SO₄, where cobalt is extracted as cobalt sulfate and removed by filtration using a filter with pores of 0.1 to 4 µm. Next, precipitating nickel 113 from the solution obtained from cobalt extraction step 112A by adding Na₂CO₃ or NaOH, wherein the nickel is precipitated as nickel oxide, hydroxide, or carbonate and removed by filtration using a filter with pores of 0.1 to 4 µm; precipitating residual lithium 114 from the solution obtained after nickel precipitation step 113, wherein the residual lithium is precipitated as Li₂SO₄, Li₃PO₄, Li₂CO₃, or LiOH and removed by filtration using a filter with pores of 0.1 to 4 µm. In all of the steps described abovefluorine precipitation 105, lithium precipitation 106, leaching 107, leachate filtration 108, ozonation 110, aluminum precipitation 111A, cobalt solvent extraction 112A, nickel precipitation 113, and residual lithium precipitation 114-the filters used preferably have pores of 1 to 2 µm and may be of paper or membrane type.

The process 100 of the present invention is applicable to LCO, NCA, and NMC batteries (types 111, 622, 532, 631, 811), as well as LMO and LMO-NMC batteries, of the prismatic, cylindrical, and pouch types. The process can also recycle different types of these batteries simultaneously. Regarding the types of batteries, this process has demonstrated the feasibility of recycling, in a single process, batteries of different cathode materials (active materials) and form factors (pouch, cylindrical, or prismatic). Moreover, this process does not employ thermal treatment during the mechanical processing of the batteries, which is innovative in the recycling field. Additionally, it has been shown that electrical energy can be recovered through the discharging step as implemented in the present invention, since it does not use a saline solution as in the prior art, which would cause corrosion and, consequently, material loss.

The discharging step 101 is carried out in two sub-steps, both of which may be performed using resistors, either to eliminate the residual electricity or to recover electrical energy. Illustratively, the discharging step 101 can be carried out using Ni-Cr and metallic Cu resistors connecting the battery terminals, either in series or in parallel, for a period of 12 to 24 hours. The grinding step 102 includes the continuous addition of a cooling fluid, preferably water (wet grinding, which avoids the risk of explosions, unlike existing processes). The battery cells are fed into the mill at intervals of 1 to 20 seconds between each batch, and the ground material has a particle size of less than 50 mm. In the fluorine precipitation step 105, the amount of Ca(OH)₂ or CaCl₂ added is between the stoichiometric amount and 20% excess, with a reaction time of 2.0 hours, at a temperature between 25°C and 90°C, achieving up to 99% fluorine precipitation efficiency. In the lithium precipitation step 106, the amount of Na₂CO₃ added is between the stoichiometric amount and 20% excess, with a reaction time of 2.0 hours at 80°C, and an efficiency of at least approximately 10% lithium precipitation. The remaining lithium still present in solution may be removed at the end of the process in a dedicated step for the precipitation of the remaining lithium 114.

In the present invention, the external structure of the battery cells, aluminum, graphite, active material, aluminum and copper foils, and the cathode (from all types of batteries) are directed to the acidic leaching step 107, which uses an acid concentration ranging from 0.5 mol/L to 4.0 mol/L, preferably from 0.7 mol/L to 2 mol/L, at a temperature between 25°C and 90°C, preferably 60°C to 90°C, and a reaction time of between 0.5 and 5.0 hours, preferably 1 to 3 hours. Regarding the leaching step 107, a key distinctive feature of the present invention is the absence of a reducing agent. The leaching efficiency of the present invention may reach up to 99% of the metals present in the active material, even without a reducing agent, due to the presence of the metallic aluminum foil from the battery cells. The efficiency of the present invention is shown in Table 1, which provides a comparison between the results obtained with the claimed process and those of prior art processes that use a reducing agent or a different type of acid from those employed in the present process.

**Table 1**

| Process | Conditions | % Li | % Ni | % Co | % Mn | % Al |
|---|---|---|---|---|---|---|
| Invention | H₂SO₄ or C₆H₈O₇ (citric acid) without reducing agent | 95-99 | 95-99 | 95-99 | 95-99 | 35-70^{(a)} |
| US20210395859^{(b)} | 25% H₂SO₄ and 40% Na₂S₂O₃ | - | - | 20 | 90 | - |
| WO2022006469 | H₂SO₄ + SO₂ | 100 | 100 | 100 | 100 | - |
| US20220136079A1 | 1.0mol/L C₆H₈O₇^{(c)} | 90 | 99 | 85 | 90 | 75 |
| Xuan et al. (2021)^{(d)} | 4.0mol/L HCl | 99 | 99 | 99 | 99 | - |

Table 1 references: **(a)**: 99% aluminum leaching from the active material, and 70% aluminum leaching considering both the active material and the current collector foil; **(b)**: iron contamination during the leaching step; **(c)**: the authors evaluated fruit juices (orange, pear, lemon, apple, and banana) as leaching agents; **(d)**: https://linkinghub.elsevier.com/retrieve/pii/S0304386X21001547. Direct leaching of the active material, it is not battery processing.

The liquor obtained in the leaching step 107 contains the metals manganese, aluminum, cobalt, nickel, and lithium (85% of the elements present in the batteries and remaining after step 106). After the leaching step 107, filtration 108 is performed to separate the leach liquor from the solid material. The solid material filtered in step 108 comprises graphite, remnants of the battery's external structure, metallic copper sheets, and metallic aluminum sheets. The solid material (leaching residue), external aluminum structure, graphite, and aluminum and copper sheets proceed to the elutriation step, in which water is fed from below the tank (or column), and aluminum and graphite exit from the top (overflow), while copper and the battery's external structure exit from the bottom of the tank (underflow). Separation of aluminum and graphite is performed by sieving with meshes smaller than 2 mm, as well as separation of copper and the external structure, also by sieving with openings smaller than 2 mm.

The leach liquor proceeds to manganese precipitation by ozone 110, which can occur in batch reactors or in columns in a continuous system, with gas flow rates between 0.2 L/min and 3.0 L/min, preferably 0.6 L/min to 2 L/min, at a temperature range between 10°C and 60°C, preferably 15°C to 35°C. After the reaction, solid-liquid separation is performed by filtration using a filter with pores up to 2 µm, yielding manganese oxide as the product with an efficiency of up to 99%. This ozonation technique is not explored in lithium battery recycling processes, as existing methods focus on manganese extraction by solvent techniques. The use of ozone has proven to be a viable selective technique for manganese separation in a single step, already in the form of oxide with at least 95% purity.

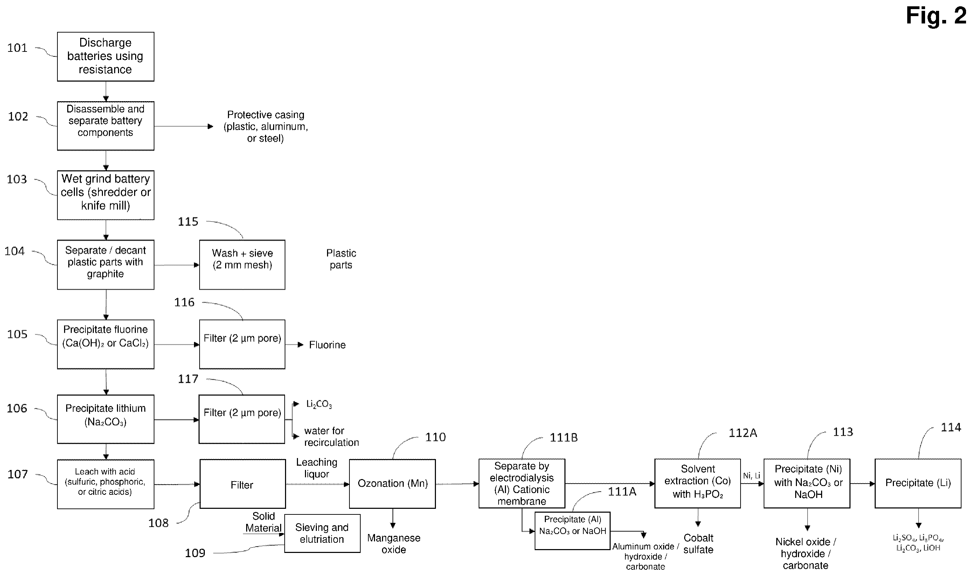

The filtrate (solution) from step 110 may proceed to the aluminum precipitation step 111A using Na₂CO₃ or NaOH, within a pH range of 3.0 to 5.0, a temperature between 25°C and 80°C, and a reaction time of 0.5 to 3.0 hours, achieving up to 99% aluminum precipitation efficiency. Aluminum hydroxide, aluminum carbonate, or aluminum oxide (the latter after treatment between 200°C and 800°C for 1 to 5 hours) can be obtained. Another aluminum separation technique that can be performed is electrodialysis 111B, as shown in Figure 2, using cationic and anionic membranes with an electric current between 200 mA and 400 mA over 30 hours. The aluminum-concentrated solution from electrodialysis 111B then proceeds to the aluminum precipitation step 111A to obtain aluminum hydroxide, aluminum carbonate, or aluminum oxide, as previously described. This step has an aluminum precipitation efficiency of up to 99%. The use of electrodialysis has proven to be an important alternative for continuous-flow aluminum separation, especially without reagent addition. This technique is widely used for water desalination but has been found to be effective for aluminum separation in hydrometallurgical processes as well.

After aluminum separation by filtration using a 2 µm filter, the solution proceeds to cobalt separation. Cobalt separation is carried out by solvent extraction using phosphinic acid, where lithium and nickel remain in the aqueous phase, and cobalt is retained in the organic phase. The re-extraction step is important to transfer the extracted cobalt from the organic phase back to the aqueous phase, which then proceeds to precipitation steps 113 and 114, where cobalt oxalate, hydroxide, carbonate, or metallic cobalt (via electrolysis) can be obtained. The cobalt solvent extraction step 112A uses phosphinic acid at a temperature range of 25°C to 60°C in countercurrent with an aqueous-to-organic phase ratio between 1/5 and 5/1, with phosphinic acid concentrations between 5% and 25% v/v. The cobalt recovery rate can reach up to 99% in the solvent extraction step with a single contact. In step 112A, the organic phase can be treated with sulfuric acid between 0.1 mol/L and 5.0 mol/L at temperatures between 25°C and 60°C in countercurrent with an aqueous-to-organic phase ratio between 1/5 and 5/1 to obtain a cobalt sulfate solution. This solution can undergo crystallization to obtain crystallized cobalt sulfate. Precipitation with sodium oxalate (Na₂C₂O₄) or oxalic acid (H₂C₂O₄), in amounts between stoichiometric and 20% excess, can be performed to obtain cobalt oxalate (1:1 ratio), followed by calcination to produce cobalt oxide. Alternatively, cobalt carbonate can be obtained by precipitation with Na₂CO₃ at pH 6 to 10 for 30 minutes to 3.0 hours at temperatures between 25°C and 80°C. Filtration is carried out using a 2 µm filter to retain the solid phase (cobalt product/salt).

The nickel precipitation step 113, following cobalt separation, can be performed using Na₂CO₃ or NaOH at temperatures between 25°C and 80°C and pH range of 5.0 to 9.0 for a duration of 0.5 to 3.0 hours. In this step, nickel hydroxide, nickel carbonate, or nickel oxide (the latter obtained after treatment between 200°C and 800°C for 1.0 to 5.0 hours) can be produced. After the reaction, with up to 99% nickel recovery, the solid is obtained by filtration using a 2 µm filter.

The battery recycling process 100 of the present invention ends with the step of precipitating the remaining lithium 114, which can be carried out by one of the following methods:
i) crystallizing the solution resulting from the nickel precipitation step 113 at a temperature between 80°C and 110°C, with a reaction time between 1.0 and 5.0 hours, to obtain lithium sulfate (Li₂SO₄);
ii) adding sodium phosphate (solid or in solution) to the solution under stirring, at a temperature between 25°C and 90°C, with a reaction time between 1.0 and 5.0 hours, to obtain lithium phosphate (Li₃PO₄);
iii) adding sodium carbonate to the solution under stirring, at a concentration between 50 g/L and 200 g/L, at a temperature between 25°C and 90°C, with a reaction time between 1.0 and 5.0 hours, to obtain lithium carbonate (Li₂CO₃); or
iv) from the lithium carbonate obtained in (iii), adding calcium hydroxide at a concentration between 0.2 g/L and 1.0 g/L, at a temperature between 25°C and 90°C, with a reaction time between 1.0 and 5.0 hours, to obtain lithium hydroxide (LiOH).

At the end of process 100, after the step of precipitating the remaining lithium 114, the solution may undergo a crystallization step to obtain sodium sulfate crystals as by-products, and the acid used in the leaching is recovered for reuse in the leaching step.

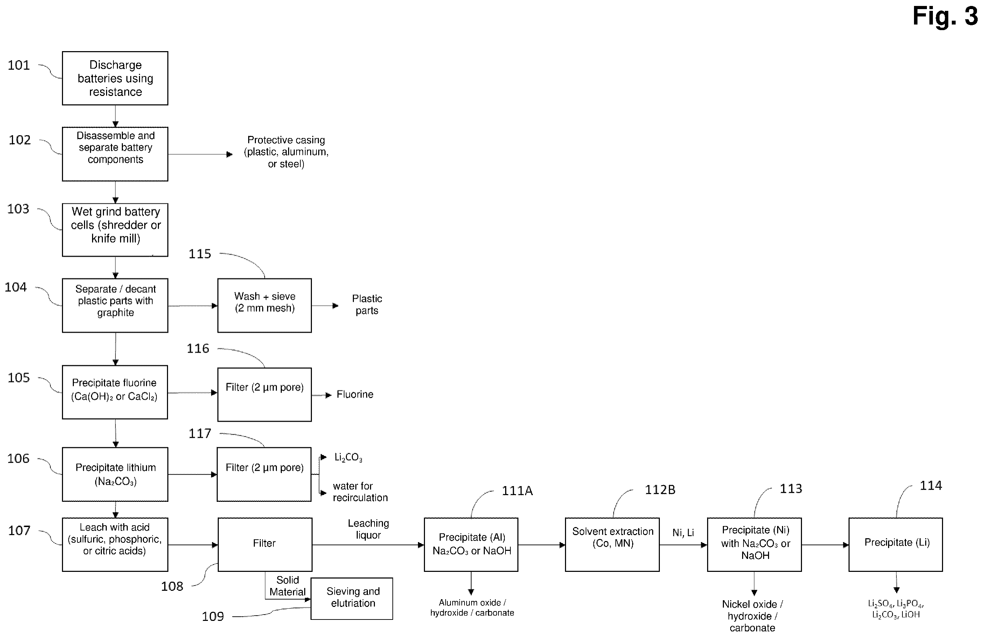

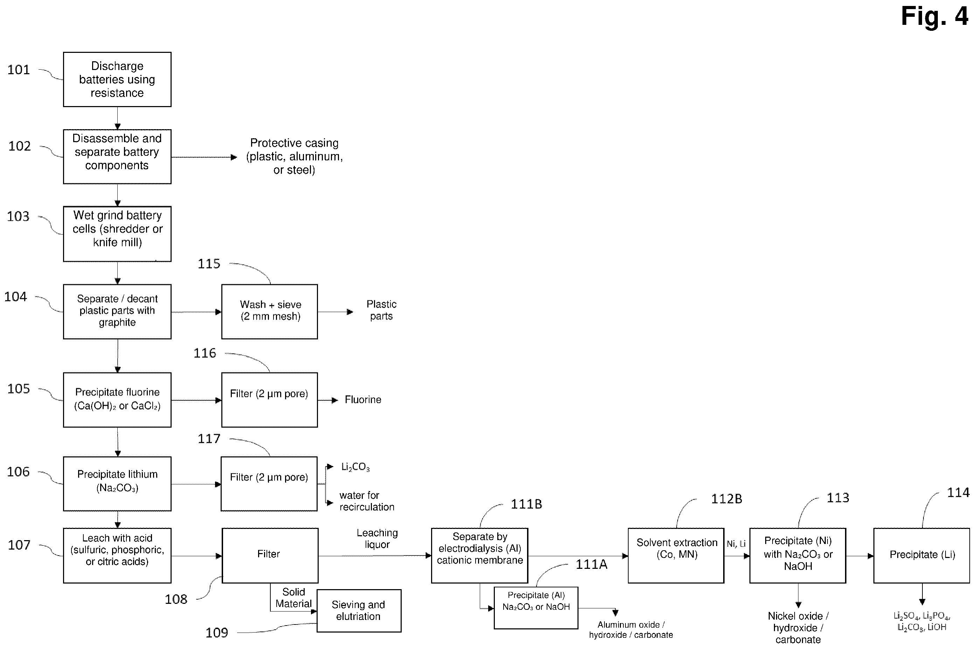

Figures 3 and 4 illustrate another alternative embodiment of the battery recycling process 100 of the present invention, in which there is no ozonation step 110 for manganese separation, as the manganese can be separated together with cobalt in a solvent extraction step 112B. The steps of discharging the batteries 101, disassembling and separating the components of the battery 102, grinding the battery cells 103, separating plastic parts with graphite and active material 104, precipitating fluorine 105, precipitating lithium 106, leaching with acid 107, filtering the leachate solution 108, separating the solid material 109, precipitating aluminum 111A, precipitating nickel 113, and precipitating remaining lithium 114 remain in this embodiment of the invention.

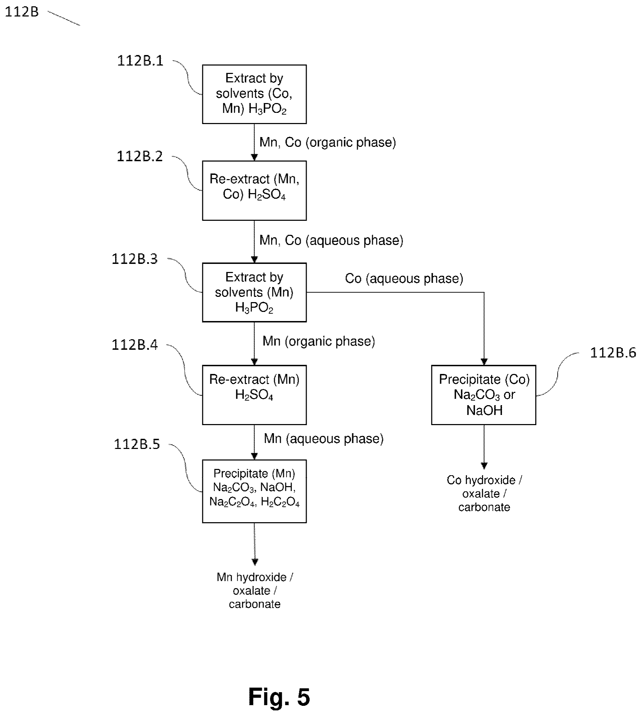

The technique of aluminum separation by electrodialysis 111B also proved suitable for this embodiment of the invention, using cationic and anionic membranes with an electric current ranging from 200 mA to 400 mA for 30 hours. The leach liquor from the leachate solution filtration step 108 proceeds to the electrodialysis separation step 111B, and the aluminum-enriched solution obtained from electrodialysis 111B proceeds to the aluminum precipitation step 111A to obtain aluminum hydroxide, aluminum carbonate, or aluminum oxide, as previously described. This step achieves up to 99% efficiency in aluminum precipitation. The solution enriched in cobalt, manganese, nickel, and lithium resulting from electrodialysis 111B is then directed to the cobalt and manganese solvent extraction step 112B. Figure 5 illustrates the cobalt and manganese extraction step 112B with its six sub-steps:
- 112B.1) extracting cobalt and manganese from the solution using phosphinic acids such as bis(2,4,4-trimethylpentyl)phosphinic acid, di-(2-ethylhexyl)phosphoric acid, trialkyl phosphine, phosphonic or phosphinic acid, generating two phases, one aqueous and one organic, with the aqueous phase being drained; 112B.2) re-extracting cobalt and manganese from the organic phase of sub-step 112B.1) with H₂SO₄, wherein cobalt is extracted as cobalt sulfate and manganese is extracted as manganese sulfate in the aqueous phase;
- 112B.3) extracting manganese from the solution originating from sub-step 112B.2) using phosphinic acids such as bis(2,4,4-trimethylpentyl)phosphinic acid, di-(2-ethylhexyl)phosphoric acid, trialkyl phosphine, phosphonic or phosphinic acid, generating two phases: an aqueous phase containing cobalt and an organic phase containing manganese, the aqueous phase with cobalt being directed to cobalt precipitation;
- 112B.4) re-extracting the manganese from the organic phase solution from sub-step 112B.3) using H₂SO₄, wherein the manganese is extracted in the form of manganese sulfate in the aqueous phase;
- 112B.5) precipitating the manganese from the aqueous phase of sub-step 112B.4) using one of the agents Na₂CO₃, NaOH, Na₂C₂O₄, or H₂C₂O₄, wherein the manganese is precipitated in the form of manganese hydroxide, manganese oxalate, or manganese carbonate, and removed from the solution by filtration using a filter with pores ranging from 0.1 to 4 µm; and
- 112B.6) precipitating the cobalt from the aqueous phase of the solution from sub-step 112B.3) using one of the agents Na₂CO₃, C₂H₂O₄ (oxalic acid), Na₂C₂O₄ (sodium oxalate), or NaOH, wherein the cobalt is precipitated in the form of cobalt hydroxide, cobalt oxalate, or cobalt carbonate, and removed from the solution by filtration using a filter with pores ranging from 0.1 to 4 µm.

The extraction sub-steps 112B.1 and 112B.3 may be carried out at a temperature range between 25°C and 60°C, in countercurrent mode, with an aqueous-to-organic ratio between 1:5 and 5:1, and a concentration of phosphinic acids between 5% and 25% v/v. The re-extraction sub-steps 112B.2 and 112B.4 may be carried out at a temperature range between 25°C and 60°C, in countercurrent mode, with an aqueous-to-organic ratio between 1:5 and 5:1, and a concentration of H₂SO₄ between 0.1 mol/L and 5.0 mol/L. The manganese precipitation sub-step 112B.5 and cobalt precipitation sub-step 112B.6 may be performed with the agents added in amounts ranging from the stoichiometric quantity to an excess of 20%, within a pH range of 6.0 to 10.0, reaction time between 0.5 and 3.0 hours, and temperature between 25°C and 80°C.

Optionally, the manganese oxalate obtained in sub-step 112B.4 and the cobalt oxalate obtained in sub-step 112B.6 may undergo a calcination step, at a temperature between 400°C and 800°C, to obtain cobalt oxide and manganese oxide.

With the present invention, it is possible to carry out the resynthesis of cathodes. Resynthesis consists of the production/synthesis of the active material of lithium-ion batteries. This active material refers to the battery's cathode. The term resynthesis is used to define the synthesis of the active material from the leach liquor generated during the leaching of lithium-ion batteries such as LCO (LiCoO₂), NCA (LiNiCoAlO₂), LMO (LiMnO₂ or LiMn₂O₄), NMC (LiNiₓMn_{y}Co_{z}O₂), and LMO-NMC, immediately after leaching step 107, as described below:
- NMC cathode: remove aluminum by precipitation 110A or electrodialysis 110B;
- NCA cathode: manganese precipitation by ozone 110;
- LMO cathode: use the manganese oxide obtained in step 110 (ozonation or solvent extraction) with the lithium solution obtained after the nickel precipitation step 113;
- LCO cathode: use the cobalt sulfate solution with the lithium solution obtained after the nickel precipitation step 113.

Alternatively, instead of performing direct resynthesis from the leach liquor, the products obtained in the separation, extraction, and precipitation steps 110, 111A, 111B, 112A, 112B, 113, and 114 may be used. The indirect resynthesis process can be carried out by co-precipitation with NH₄HCO₃ and Na₂CO₃, with a reaction time between 0.5 and 12 hours, at a temperature between 25°C and 90°C. Then, the solid undergoes treatment at a temperature between 200°C and 500°C, for a reaction time between 0.5 and 12 hours, in an air or inert atmosphere, followed by calcination at a temperature between 600°C and 800°C, for a reaction time between 0.5 and 12 hours, in an inert, air, or oxygen atmosphere.

The main innovations of the present invention lie in the absence of a reducing agent in the leaching step 107 and in mechanical processing without any thermal treatment to concentrate the metals of interest from the battery cathodes. Additionally, the leaching step can achieve efficiency values close to 99% for Ni, Co, Mn, and Li due to the presence of metallic aluminum from the electron collector foil. This was confirmed for all the batteries studied, using inorganic acids (sulfuric and phosphoric) as well as an organic acid (citric). Flexibility was assessed by conducting leaching experiments with batteries separately and then by mixing different types of cathodes (such as NCA and NMC, for example), and the leaching efficiency achieved was at least 95%.

The solid products obtained from the aluminum precipitation step 111A are subjected to an acid washing step (pH 5.0) to remove metals that co-precipitated.

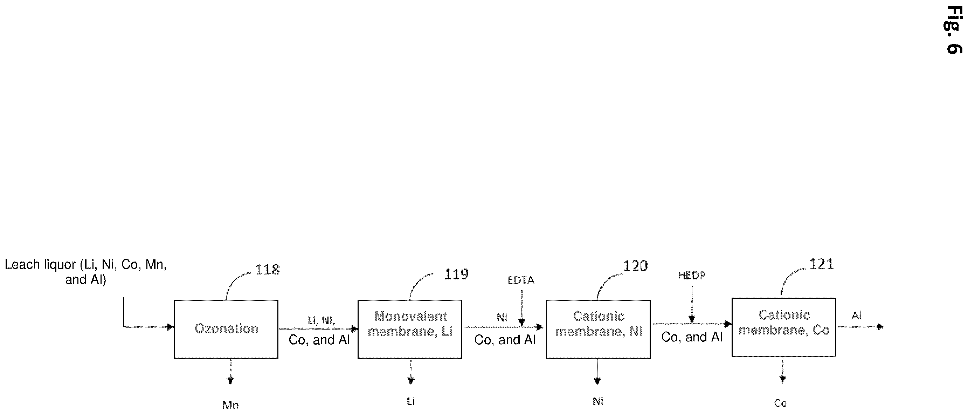

Another metal separation technique that can be performed after the acid leaching and filtration steps is the separation technique using ozonation and electrodialysis, as shown in Figure 6. The liquor formed (containing lithium, nickel, cobalt, manganese, and aluminum) proceeds to an ozonation step 118. In this step, manganese is recovered, and the resulting solution (containing lithium, nickel, cobalt, and aluminum) proceeds to electrodialysis separation steps 119-121. The first electrodialysis step 119 uses a monovalent membrane to separate lithium from the other metals in the concentrated solution obtained from leaching. The second electrodialysis step 120 uses a cation-exchange membrane, in a system with both cationic and anionic membranes, for the separation of nickel. This step requires the solution to be prepared before passing through the membrane. The solution containing nickel, cobalt, and aluminum is complexed by adding EDTA. After passing through the cationic membrane in the cationic-anionic membrane system, nickel is separated. The solution containing cobalt and aluminum proceeds to the third and final electrodialysis step 121. Before this, the solution must be prepared by adding the complexing agent 1-hydroxyethane-1,1-diphosphonic acid. After complexation, the solution is passed through a cation-exchange membrane in a cationic-anionic membrane system, allowing for the separation of cobalt and aluminum into two distinct solutions. After all separation steps, each metal-specific solution proceeds to a recovery step, which can be either precipitation or electrodeposition.

The leach liquor is treated by ozonation 118 for manganese separation. The ozonation process consists of injecting ozone into the leach liquor exiting the leaching step to increase the redox potential of the solution and precipitate manganese. Ozone is generated from a generator and oxygen, and then injected directly into the solution to react with the manganese ions. After ozonizing the leach liquor, manganese is separated either by filtration in the form of manganese oxide, using a filter with pores ranging from 0.1 to 4 µm, or by electrodeposition (also in oxide form).

The use of electrodialysis proved to be an important alternative for metal separation in continuous flow, especially without the addition of reagents. Although this technique is widely used for water desalination, it was found to also be effective for metal separation in hydrometallurgical processes.

After ozonation, the solution exiting the ozonation treatment is subjected to a lithium separation step by electrodialysis using a monovalent membrane (119), in which electrodialysis is carried out within a current range of 10 mA to 400 mA, preferably 10 mA to 70 mA, with a current density of 1.0 mA/cm² to 31.25 mA/cm², preferably 12.5 mA/cm² to 25 mA/cm², and a reaction time of 20 hours to 160 hours, preferably up to 30 hours. The lithium-enriched solution then proceeds to the lithium recovery step by precipitation, while the remaining solution is directed to a new electrodialysis step. Next, the solution exiting the lithium separation step by electrodialysis is subjected to complexation with ethylenediaminetetraacetic acid (EDTA) before proceeding to a nickel separation step (120) by electrodialysis using a cation-exchange membrane, within a system comprising both cationic and anionic membranes. Electrodialysis is carried out at an electric current ranging from 100 mA to 500 mA, preferably from 200 mA to 400 mA, with a current density between 1.0 mA/cm² and 31.25 mA/cm², preferably between 12.5 mA/cm² and 25 mA/cm², and a reaction time of 20 to 160 hours, preferably up to 30 hours. The nickel-enriched solution then proceeds to a recovery step by either precipitation or electrodeposition of nickel (in metallic form), while the remaining solution is sent to a further electrodialysis step. Finally, the solution exiting the nickel separation step by electrodialysis is subjected to complexation with 1-hydroxyethane-1,1-diphosphonic acid (HEDP), and subsequently proceeds to a cobalt and aluminum separation step (121) by electrodialysis using a cation-exchange membrane, within a system comprising both cationic and anionic membranes. The electrodialysis is performed with an electric current ranging from 100 mA to 500 mA, preferably from 200 mA to 400 mA, with a current density between 1.0 mA/cm² and 31.25 mA/cm², preferably between 12.5 mA/cm² and 25 mA/cm², and a reaction time of 20 to 160 hours, preferably up to 30 hours. This step yields two distinct solutions, which proceed to recovery steps by precipitation or electrodeposition of cobalt (in metallic form) and precipitation or electrodeposition of aluminum (in metallic form).

As noted, after all the electrodialysis separation steps, each solution containing a specific metal proceeds to the recovery stage, which can be either precipitation or electrodeposition. Precipitation occurs as previously discussed, while electrodeposition also takes place as described earlier.

The metal separation technique performed after the acid leaching stages and separation by ozonation and electrodialysis, as shown in Figure 6, presents three relevant aspects: a) the application of a solution with high metal concentrations (leach liquor) for the ozonation technique and manganese recovery; b) the application of a solution with high metal concentrations (leach liquor) for the electrodialysis technique in the first step, i.e., lithium separation using monovalent membranes; and c) the use of a complexing agent HEDP for the separation of cobalt and aluminum.

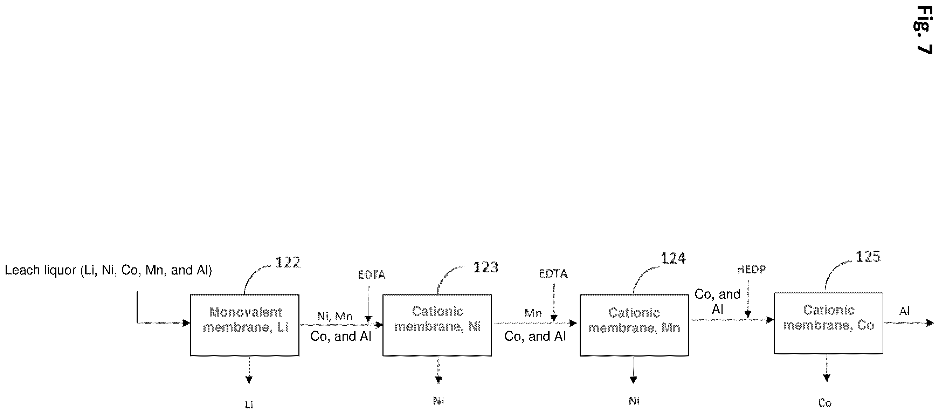

Another metal separation technique performed after the acid leaching and separation stages is the electrodialysis technique shown in Figure 7. The resulting liquor (containing lithium, nickel, cobalt, manganese, and aluminum) proceeds to the first electrodialysis stage 122. In this stage, a monovalent membrane is used to separate lithium from the other metals present in the concentrated leach liquor solution. The second stage 123 of electrodialysis involves the use of a cationic membrane, within a system of cationic and anionic membranes, to separate nickel. This nickel separation requires preparation of the solution prior to passing through the membrane. The solution containing nickel, cobalt, manganese, and aluminum is complexed by the addition of EDTA. After passing the solution through the cationic membrane within the cationic and anionic membrane system, nickel is separated, yielding a monoelemental nickel solution. The solution containing manganese, cobalt, and aluminum proceeds to the third electrodialysis stage 124. Beforehand, the solution containing manganese, cobalt, and aluminum needs to be prepared by the addition of the complexing agent EDTA. After complexation, the solution is passed through the cationic membrane within a system of cationic and anionic membranes, thereby achieving the separation of manganese from the other metals (cobalt and aluminum). The solution containing cobalt and aluminum proceeds to the fourth and final electrodialysis stage 125. Prior to this, the solution containing cobalt and aluminum must be prepared by the addition of the complexing agent HEDP. After complexation, the solution is passed through the cationic membrane within a system of cationic and anionic membranes, resulting in the separation of cobalt and aluminum into two distinct solutions. After all the separation stages, each solution containing the specific metal proceeds to the recovery stage, which may involve precipitation or electrodeposition.

The use of electrodialysis has proven to be an important alternative for continuous-flow metal separation, especially without the addition of reagents. This technique is widely used for water desalination, but it has been found to also be effective for metal separation in hydrometallurgical processes.

The leach liquor undergoes a lithium separation step 122 by electrodialysis using a monovalent membrane, where the electrodialysis is performed within a current range of 10 to 400 mA, preferably 10 to 70 mA, with a current density from 0.1 mA/cm² to 25 mA/cm², preferably 12.5 mA/cm² to 25 mA/cm², and a reaction time of 20 to 160 hours, preferably up to 30 hours. The lithium-concentrated solution proceeds to the lithium recovery step by precipitation, while the remaining solution proceeds to a subsequent electrodialysis step. Next, the solution exiting the lithium separation step by electrodialysis undergoes complexation with ethylenediaminetetraacetic acid (EDTA), and then proceeds to a nickel separation step by electrodialysis using a cationic membrane within a system of cationic and anionic membranes. The electrodialysis is performed within a current range of 100 mA to 500 mA, preferably 200 mA to 400 mA, with a current density from 0.1 mA/cm² to 25 mA/cm², preferably 12.5 mA/cm² to 25 mA/cm², and a reaction time between 20 and 160 hours, preferably up to 30 hours. The nickel-concentrated solution proceeds to the recovery step by precipitation or electrodeposition of nickel (in metallic form), and the remaining solution proceeds to a subsequent electrodialysis step. The solution exiting the nickel separation step by electrodialysis is subjected to complexation with ethylenediaminetetraacetic acid (EDTA), and subsequently proceeds to a manganese separation step by electrodialysis using a cationic membrane within a system of cationic and anionic membranes. The electrodialysis is performed within a current range of 100 mA to 500 mA, preferably 200 mA to 400 mA, with a current density from 0.1 mA/cm² to 25 mA/cm², preferably 12.5 mA/cm² to 25 mA/cm², and a reaction time between 20 and 160 hours, preferably up to 30 hours. The manganese-concentrated solution proceeds to the recovery step by precipitation or electrodeposition of manganese (in oxide form), and the remaining solution proceeds to a subsequent electrodialysis step. The solution exiting the manganese separation step by electrodialysis is subjected to complexation with 1-hydroxyethane-1,1-diphosphonic acid (HEDP), and subsequently proceeds to a cobalt and aluminum separation step by electrodialysis using a cationic membrane within a system of cationic and anionic membranes. The electrodialysis is performed within a current range of 100 mA to 500 mA, preferably 200 mA to 400 mA, with a current density from 0.1 mA/cm² to 25 mA/cm², preferably 12.5 mA/cm² to 25 mA/cm², and a reaction time between 20 and 160 hours, preferably up to 30 hours. Two distinct solutions are obtained, which proceed to the recovery step by precipitation or electrodeposition of cobalt (in metallic form) and precipitation or electrodeposition of aluminum (in metallic form), respectively.

As noted, after all electrodialysis separation steps, each solution containing the specific metal proceeds to a recovery step, which may be precipitation or electrodeposition. Precipitation occurs as previously discussed, as does electrodeposition.

The metal separation technique that can be performed after the acid leaching and filtration steps by electrodialysis shown in Figure 7 presents two relevant aspects: a) the application of a solution with high metal concentrations for the electrodialysis technique in the first stage, that is, the separation of lithium using monovalent membranes; and b) the use of a complexing agent HEDP for the separation of cobalt and aluminum.

The new battery recycling process (100) of the present invention has a combination of advantages, among which the following stand out:
- possibility of recycling various types of batteries (active materials/cathodes and configurations) in a flexible manner;
- discharging of the batteries without loss of materials;
- no thermal treatment steps in the mechanical and chemical processing of the batteries to be recycled;
- grinding of the batteries in water;
- no consumption of reducing agent in the leaching step;
- obtaining high-purity products derived from the active cathode material of the batteries;
- possibility of resynthesis of the cathodes from the leaching solution or products obtained in the recycling process;
- recovery of plastic, metallic copper, metallic aluminum, and the external battery structure during battery recycling by physical separation;
- alternative methods for metal separation after leaching, such as the use of ozone and membranes (electrodialysis).

This written description uses examples to illustrate the invention, including the best mode, and also to enable any person skilled in the art to practice the invention, including producing and using any devices or systems and performing any incorporated methods. The patentable scope of the invention is defined by the claims and may include other examples that occur to those skilled in the art. Such other examples are intended to be encompassed within the scope of the claims if they include structural elements that do not differ from the literal language of the claims, or if they include equivalent structural elements with insubstantial differences from the literal language of the claims.

## Claims

1. Battery recycling process (100), **CHARACTERIZED in that** it comprises the following steps:
discharging the batteries (101) to be recycled via resistance method, for energy recovery;
disassembling and separating the components of the battery (102), wherein the components are grouped as: electronic components and protective structure, as well as the battery cells;
grinding the battery cells (103), wherein the batteries are selected from LCO, NCA, NMC (111, 622, 532, 631, 811), LMO, LMO-NMC batteries, and combinations thereof, wherein the batteries are of the prismatic, cylindrical, pouch types, or combinations thereof, wherein the grinding is carried out in a cooling fluid;
separating (104), from the ground material originating from the grinding step (103), plastic parts with graphite and active material, wherein the plastic parts with graphite and active material are washed and screened (115) to separate the graphite and active material, the graphite and active material proceed to leaching, and the screen used has a mesh size between 0.1 and 4 mm, wherein the separation is free from heat treatment and decomposition of the materials;
precipitating fluorine (105) from the solution originating from the separation step (104), the cooling fluid from step (103), with addition of Ca(OH)₂ or CaCl₂, wherein the precipitated fluorine is removed from the solution through filtration (116), using a filter with pores ranging from 0.1 to 4 µm;
precipitating lithium (106) from the solution originating from the fluorine precipitation step (105) by addition of Na₂CO₃, wherein the precipitated lithium is removed from the solution by filtration (117), using a filter with pores ranging from 0.1 to 4 µm;
leaching with organic or inorganic acid or solid resulting from the grinding and physical separation step, wherein the leaching is free of reducing agent addition;
filtering the leachate solution (108) to separate the leachate liquor and solid material, using a filter with pores ranging from 0.1 to 4 µm;
separating the solid material (109) filtered in step (108) by at least one of the following methods: decantation, centrifugation, vibrating table, screening, or elutriation;
treating by ozonation (110) the acidic organic or inorganic leach liquor from the output of step (108), free of added reducing agent, for separation of manganese from the other metals, wherein the other metals are lithium, cobalt, and nickel the manganese being separated by filtration in the form of manganese oxide, using a filter with pores from 0.1 to 4 µm;
precipitating aluminum (111A) from the solution resulting from the ozonation step (110) by addition of Na₂CO₃ or NaOH, wherein the aluminum is precipitated and obtained in the form of aluminum oxide, aluminum hydroxide, or aluminum carbonate, and removed from the solution by filtration using a filter with pores ranging from 0.1 to 4 µm;
extracting cobalt by solvent extraction (112A) from the solution resulting from the aluminum precipitation step (111A) in three sub-steps:
a) using phosphinic acids such as bis(2,4,4-trimethylpentyl)phosphinic acid, di-(2-ethylhexyl)phosphoric acid, trialkylphosphine, phosphonic or phosphinic acid as extractants to generate two phases, one aqueous and one organic,
b) draining the aqueous phase, and
c) sending the organic phase to a re-extraction solution with H₂SO₄, in which cobalt is extracted as cobalt sulfate,
d) obtaining cobalt salts by precipitation with oxalates, carbonates or hydroxides which are then removed from the solution by filtration using a filter with pores ranging from 0.1 to 4 µm;
precipitating nickel (113) from the solution resulting from the cobalt solvent extraction step (112A) by adding Na₂CO₃ or NaOH, whereby nickel is precipitated and obtained as nickel oxide, nickel hydroxide, or nickel carbonate, separated from lithium, cobalt and manganese, and removed from the solution by filtration using a filter with pores ranging from 0.1 to 4 µm; wherein the nickel precipitation step (113) is carried out within a pH range of 5.0 to 9.0, temperature between 25°C and 80°C, and reaction time between 0.5 and 3.0 hours, and
precipitating the remaining lithium (114) from the solution resulting from the nickel precipitation step (113), wherein the remaining lithium is precipitated in the form of Li₂SO₄, Li₃PO₄, Li₂CO₃, or LiOH, and removed from the solution by filtration using a filter with pores ranging from 0.1 to 4 µm.

2. Battery recycling process (100), according to claim 1, **CHARACTERIZED in that**:
the discharging step (101) is carried out in two discharging sub-steps, which enable the recovery of the electrical energy discharged from the batteries.

3. Battery recycling process (100), according to claim 1 or 2, **CHARACTERIZED in that**:
the grinding step (102) is performed using a shredder-type mill or a knife mill.

4. Battery recycling process (100), according to any one of the claims 1 to 3, **CHARACTERIZED in that**:
the grinding step (102) includes the constant addition of a cooling fluid, in which the refrigerant solubilizes part of the lithium, fluorine and recovers the electrolyte from the batteries, the battery cells are fed into the mill at intervals of 1 to 20 seconds between each batch, and the ground material has a particle size smaller than 50 mm.

5. Battery recycling process (100), according to any one of the claims 1 to 4, **CHARACTERIZED in that**:
the cooling fluid used in the grinding step (102) is water.

6. Battery recycling process (100), according to any one of the claims 1 to 5, **CHARACTERIZED in that**:
the separation step (104) is carried out by at least one of the following methods: decantation, centrifugation, or vibrating table.

7. Battery recycling process (100), according to any one of the claims 1 to 6, **CHARACTERIZED in that**:
the screen used in the separation step (104) has a mesh size between 1 and 2 mm.

8. Battery recycling process (100), according to any one of the claims 1 to 7, **CHARACTERIZED in that**:
in the fluorine precipitation step (105), the amount of Ca(OH)₂ or CaCl₂ added is between the stoichiometric amount and 20% excess, with a reaction time of up to 2.0 hours, at a temperature between 25°C and 90°C.

9. Battery recycling process (100), according to any one of the claims 1 to 8, **CHARACTERIZED in that**:
in the lithium precipitation step (106), coming from the fluorine precipitation step (105), the amount of Na₂CO₃ added is between the stoichiometric amount and 20% excess, with a reaction time of up to 2.0 hours, at a temperature between 20°C and 80°C, and with a lithium precipitation yield of 10%.

10. Battery recycling process (100), according to any one of the claims 1 to 9, **CHARACTERIZED in that**:
the acid used in the leaching step (107) is one selected from sulfuric acid, phosphoric acid, or citric acid.

11. Battery recycling process (100), according to any one of the claims 1 to 10, **CHARACTERIZED in that**:
the leaching step (107) is carried out without the addition of a reducing agent.

12. Battery recycling process (100), according to any one of the claims 1 to 11, **CHARACTERIZED in that**:
the leaching step (107) has an acid concentration ranging from 0.5 mol/L to 4.0 mol/L, preferably from 0.7 mol/L to 2.0 mol/L, a temperature between 25°C and 90°C, preferably from 60°C to 90°C, and a reaction time between 0.5 and 5.0 hours, preferably from 1.0 to 3.0 hours.

13. Battery recycling process (100), according to any one of the claims 1 to 12, **CHARACTERIZED in that**:
the solid material filtered in the filtration step of the leached solution (108) comprises graphite.

14. Battery recycling process (100), according to any one of the claims 1 to 13, **CHARACTERIZED in that**:
the separation step (109) is carried out by at least one of the following methods: decantation, centrifugation, vibrating table, screening, and elutriation.

15. Battery recycling process (100), according to any one of the claims 1 to 14, **CHARACTERIZED in that**:
the screen used in the screening of the separation step (109) has a mesh size between 0.03 and 4.0 mm.

16. Battery recycling process (100), according to any one of the claims 1 to 15, **CHARACTERIZED in that**:
the screen used in the screening of the separation step (109) has a mesh size between 1.5 and 3.0 mm.

17. Battery recycling process (100), according to any one of the claims 1 to 16, **CHARACTERIZED in that**:
the elutriation in the separation step (109) is carried out in a conventional elutriator.

18. Battery recycling process (100), according to any one of the claims 1 to 17, **CHARACTERIZED in that**:
the ozonation step (110) consists of the direct injection of ozone into the leach liquor exiting step (108) to react with manganese ions obtained without the addition of reducing agents during the leaching step, the ozone being generated from a generator and oxygen, step (110) is carried out in batch reactors or continuous system columns, with ozone gas flow rates between 0.2 L/min and 3 L/min, preferably 0.6 L/min to 2 L/min, at temperatures between 10°C and 60°C, preferably 15°C to 35°C, in which manganese is obtained separately from lithium, nickel and cobalt.

19. Battery recycling process (100), according to any one of the claims 1 to 18, **CHARACTERIZED in that**:
the cobalt solvent extraction step (112A) is carried out using phosphinic acid in countercurrent with an aqueous-to-organic phase ratio between 1/5 and 5/1, with a phosphinic acid concentration between 5% and 25% v/v, at a temperature between 25°C and 60°C, to obtain a cobalt sulfate solution.

20. Battery recycling process (100), according to any one of the claims 1 to 19, **CHARACTERIZED in that** it:
the nickel precipitation step (113) is carried out at a pH range between 5.0 and 9.0, a temperature between 25°C and 80°C, and a reaction time between 0.5 and 3.0 hours, wherein nickel is precipitated in the form of nickel oxide, nickel hydroxide, or nickel carbonate, and separated from lithium, cobalt, and manganese.

21. Battery recycling process (100), according to any one of the claims 1 to 20, **CHARACTERIZED in that** it:
the remaining lithium precipitation step (114) is carried out by one of the following methods:
i) crystallizing the solution resulting from the nickel precipitation step (113) at a temperature between 80°C and 110°C, with a reaction time between 1.0 and 5.0 hours, to obtain lithium sulfate (Li₂SO₄);
ii) adding sodium phosphate (solid or in solution) to the solution under agitation, at a temperature between 25°C and 90°C, with a reaction time between 1.0 and 5.0 hours, to obtain lithium phosphate (Li₃PO₄);
iii) adding sodium carbonate to the solution under agitation, at a concentration between 50 g/L and 200 g/L, with a temperature between 25°C and 90°C, and a reaction time between 1.0 and 5.0 hours, to obtain lithium carbonate (Li₂CO₃); or
iv) from the lithium carbonate obtained in item iii), adding calcium hydroxide at a concentration between 0.2 g/L and 1.0 g/L, with a temperature between 25°C and 90°C, and a reaction time between 1.0 and 5.0 hours, to obtain lithium hydroxide (LiOH).

22. Battery recycling process (100), according to any one of the claims 1 to 21, **CHARACTERIZED in that** it further comprises:
the aluminum separation step from the solution by electrodialysis (111B) being performed using a cationic membrane, where electrodialysis is carried out within a current range of 200 mA to 400 mA and a reaction time of up to 30 hours, and wherein the aluminum-concentrated solution proceeds to the aluminum precipitation step (111A), while the remaining solution proceeds to the cobalt extraction by solvent step (112A).

23. Battery recycling process (100), according to any one of the claims 1 to 22, **CHARACTERIZED in that** it further comprises:
adding sodium oxalate (Na₂C₂O₄) or oxalic acid (H₂C₂O₄) in an amount between the stoichiometric quantity and 20% excess to the cobalt sulfate solution obtained from the cobalt extraction by solvent step (112A) to obtain cobalt oxalate precipitated in a 1:1 molar ratio;
subsequently, subjecting the cobalt oxalate solution to a calcination step to obtain cobalt oxide and, optionally, adding Na₂CO₃ in an amount between the stoichiometric quantity and 20% excess, within a pH range of 6.0 to 10.0, reaction time between 0.5 and 3.0 hours, and temperature between 25°C and 80°C, to obtain cobalt carbonate; or
subjecting the solution to electrolysis to obtain cobalt in metallic form,
where the cobalt oxide, cobalt carbonate, and metallic cobalt are removed from the solution by filtration, using a filter with pores ranging from 0.1 to 4 µm.

24. Battery recycling process (100), according to any one of the claims 1 to 23, **CHARACTERIZED in that** it further comprises:
in the filtration to remove cobalt oxide, cobalt carbonate, and metallic cobalt from the solution, the filter used having pores ranging from 1 to 2 µm.

25. Battery recycling process (100), according to any one of the claims 1 to 24, **CHARACTERIZED in that**:
after the residual lithium precipitation step (114), the solution undergoes a crystallization step to obtain sodium sulfate crystals, and the acid used in the leaching is recovered for reuse in the leaching step.

26. Battery recycling process (100), according to any one of the claims 1 to 25, **CHARACTERIZED in that**:
in the fluorine precipitation (105), lithium precipitation (106), leaching (107), leachate solution filtration (108), ozonation (110), aluminum precipitation (111A), cobalt solvent extraction (112A), nickel precipitation (113), and residual lithium precipitation (114) steps, the filter used has pores ranging from 1 to 2 µm.

27. Battery recycling process (100), according to any one of the claims 1 to 26, **CHARACTERIZED in that**:
the filters used are of the paper or membrane type.

28. Battery recycling process (100), **CHARACTERIZED in that** it comprises the following steps:
discharging the batteries (101) to be recycled via resistance method, for energy recovery;
disassembling and separating the components of the battery (102), wherein the components are grouped as: electronic components and protective structure, as well as the battery cells;
grinding the battery cells (103), wherein the batteries are selected from LCO, NCA, NMC (111, 622, 532, 631, 811), LMO, LMO-NMC batteries, and combinations thereof, wherein the batteries are of the prismatic, cylindrical, pouch types, or combinations thereof, wherein the grinding is carried out in a coolant fluid;
separating (104), from the ground material obtained in the grinding step (103), plastic parts with graphite and active material, wherein the plastic parts with graphite and active material are washed and screened (115) for the separation of the graphite and active material, the graphite and active material proceeding to leaching, and the screen used has a mesh size between 0.1 and 4 mm, in which the separation is free from heat treatment and decomposition of the materials;
precipitating fluorine (105) from the solution obtained from the separation step (104) by adding Ca(OH)₂ or CaCl₂, wherein the precipitated fluorine is removed from the solution through filtration (116), using a filter with pores ranging from 0.1 to 4 µm;
precipitating lithium (106) from the solution obtained from the fluorine precipitation step (105) by adding Na₂CO₃, wherein the precipitated lithium is removed from the solution through filtration (117), using a filter with pores ranging from 0.1 to 4 µm;
leaching with an organic or inorganic acid, free from the addition of reducing agent, the solid obtained from the grinding and physical separation step;
filtering the leach solution (108) to separate leach liquor and solid material, using a filter with pores ranging from 0.1 to 4 µm;
separating the solid material (109) filtered in step (108) by at least one of decantation, centrifugation, vibrating table, sieving and elutriation;
precipitating aluminum (111A) from the solution obtained in the leaching step (108) by adding Na₂CO₃ or NaOH, wherein the aluminum is precipitated in the form of aluminum oxide, aluminum hydroxide, or aluminum carbonate, and is removed from the solution by filtration using a filter with pore sizes ranging from 0.1 to 4 µm;
extracting cobalt and manganese by solvent extraction (112B) from the solution obtained in the aluminum precipitation step (111A) in six sub-steps:
- 112B.1) extracting cobalt and manganese from the solution using phosphinic acids such as bis(2,4,4-trimethylpentyl)phosphinic acid, di-(2-ethylhexyl)phosphoric acid, trialkylphosphine, phosphonic or phosphinic acids, generating two phases-an aqueous phase and an organic phase-the aqueous phase being drained,
- 112B.2) re-extracting cobalt and manganese from the organic phase of sub-step 112B.1) using H₂SO₄, whereby cobalt is extracted as cobalt sulfate and manganese is extracted as manganese sulfate in the aqueous phase,
- 112B.3) extracting manganese from the solution resulting from sub-step 112B.2) using phosphinic acids such as bis(2,4,4-trimethylpentyl)phosphinic acid, di-(2-ethylhexyl)phosphoric acid, trialkylphosphine, phosphonic or phosphinic acids, generating two phases: an aqueous phase containing cobalt and an organic phase containing manganese, with the aqueous cobalt phase directed to cobalt precipitation,
- 112B.4) re-extracting manganese from the organic phase solution of sub-step 112B.3) with H₂SO₄, whereby manganese is extracted as manganese sulfate in the aqueous phase,
- 112B.5) precipitating manganese from the aqueous phase of sub-step 112B.4) using one of the agents Na₂CO₃, NaOH, Na₂C₂O₄, or H₂C₂O₄, whereby manganese is precipitated as manganese hydroxide, manganese oxalate, or manganese carbonate, and removed from the solution by filtration through a filter with pores ranging from 0.1 to 4 µm, and
- 112B.6) precipitating cobalt from the aqueous phase of the solution in sub-step 112B.3) using one of the agents Na₂CO₃, C₂H₂O₄ (oxalic acid), Na₂C₂O₄ (sodium oxalate), or NaOH, whereby cobalt is precipitated as cobalt hydroxide, cobalt oxalate, or cobalt carbonate, and removed from the solution by filtration through a filter with pores ranging from 0.1 to 4 µm;
precipitating nickel (113) from the solution resulting from the cobalt and manganese solvent extraction step (112B) by addition of Na₂CO₃ or NaOH, whereby nickel is precipitated as nickel oxide, nickel hydroxide, or nickel carbonate, and removed from the solution by filtration through a filter with pores ranging from 0.1 to 4 µm; and
precipitating the remaining lithium (114) from the solution resulting from the nickel precipitation step (113), wherein the remaining lithium is precipitated as Li₂SO₄, Li₃PO₄, Li₂CO₃, or LiOH, and removed from the solution by filtration using a filter with pores ranging from 0.1 to 4 µm.

29. Battery recycling process (100), according to claim 28, **CHARACTERIZED in that** it further comprises:
a separation step of aluminum from the solution by electrodialysis (111B) with a cationic membrane, in which the electrodialysis is carried out within a current range of 200 mA to 400 mA and a reaction time of up to 30 hours, and in which the aluminum-concentrated solution proceeds to the aluminum precipitation step (111A), while the remaining solution proceeds to the cobalt and manganese solvent extraction step (112).

30. Battery recycling process (100), according to claim 28 or 29, **CHARACTERIZED in that**:
the extraction sub-steps (112B.1) and (112B.3) are carried out within a temperature range of 25°C to 60°C, in countercurrent, with an aqueous-to-organic phase ratio between 1:5 and 5:1, and with a concentration of phosphinic acids between 5% and 25% v/v,
the re-extraction sub-steps (112B.2) and (112B.4) are carried out within a temperature range of 25°C to 60°C, in countercurrent, with an aqueous-to-organic phase ratio between 1:5 and 5:1, and with an H₂SO₄ concentration between 0.1 mol/L and 5.0 mol/L, and
the precipitation sub-steps of manganese (112B.5) and cobalt (112B.6) are carried out with the agents added in amounts ranging from stoichiometric to 20% excess, within a pH range of 6.0 to 10.0, reaction times between 0.5 and 3.0 hours, and temperatures between 25°C and 80°C.

31. Battery recycling process (100), according to any one of the claims 28 to 30, **CHARACTERIZED in that**:
manganese oxalate and cobalt oxalate undergo a calcination step at temperatures between 400°C and 800°C to obtain cobalt oxide and manganese oxide.

32. Battery recycling process (100), **CHARACTERIZED in that** it comprises the following steps:
discharging the batteries (101) to be recycled, via resistance method, for energy recovery;
disassembling and separating the components of the battery (102), wherein the components are grouped as: electronic components and protective structure, as well as the battery cells;
grinding the battery cells (103), wherein the batteries are selected from LCO, NCA, NMC (111, 622, 532, 631, 811), LMO, LMO-NMC batteries, and combinations thereof, wherein the batteries are of the prismatic, cylindrical, pouch types, or combinations thereof, wherein the grinding is performed in a cooling fluid;
separating (104), from the ground material resulting from the grinding step (103), plastic parts with graphite and active material, wherein the plastic parts with graphite and active material are washed and screened (115) to separate the graphite and active material, the graphite and active material proceed to leaching, and the screen used has a mesh size between 0.1 and 4 mm, in which the separation is free from heat treatment and decomposition of the materials;
precipitating fluorine (105) from the solution resulting from separation step (104) by addition of Ca(OH)₂ or CaCl₂, wherein the precipitated fluorine is removed from the solution by filtration (116), using a filter with pores between 0.1 and 4 µm;
precipitating lithium (106) from the solution resulting from the fluorine precipitation step (105) by addition of Na₂CO₃, wherein the precipitated lithium is removed from the solution by filtration (117), using a filter with pores between 0.1 and 4 µm;
leaching with organic or inorganic acid (107) the solid material resulting from the grinding and physical separation step, in which leaching is free of reducing agent;
filtering the leached solution (108) to separate the leachate liquor and solid material, using a filter with pores ranging from 0.1 to 4 µm;
separating the solid material (109) filtered in step (108);
treating by ozonation (118) the organic or inorganic acid leach liquor from the output of the of the leaching stage without the addition of reducing agent for separation of manganese from other metals, where the other metals are lithium, cobalt and nickel,
submitting the solution exiting the ozonation treatment to a lithium separation step (119) by electrodialysis using a monovalent membrane, wherein the electrodialysis is performed within a current range of 10 to 400 mA, with a current density from 0.1 mA/cm² to 25 mA/cm², and a reaction time of 20 to 160 hours, wherein the lithium-concentrated solution proceeds to the lithium recovery step, and the remaining solution proceeds to a subsequent electrodialysis step;
submitting the solution exiting the lithium separation step by electrodialysis to complexation with ethylenediaminetetraacetic acid (EDTA), and subsequently proceed to a nickel separation step by electrodialysis using a cationic membrane in a system with cationic and anionic membranes (120), wherein the electrodialysis is performed within a current range of 100 mA to 500 mA, with a current density from 1.0 mA/cm² to 31.25 mA/cm², and a reaction time of 20 to 160 hours; wherein the nickel-concentrated solution proceeds to the recovery step, and the remaining solution proceeds to a subsequent electrodialysis step; and
submitting the solution exiting the nickel separation step by electrodialysis to complexation with 1-hydroxyethane-1,1-diphosphonic acid (HEDP), and subsequently proceed to a cobalt and aluminum separation step by electrodialysis using a cationic membrane in a system with cationic and anionic membranes (121), wherein the electrodialysis is performed within a current range of 100 mA to 500 mA, with a current density from 1.0 mA/cm² to 31.25 mA/cm², and a reaction time of 20 to 60 hours; and wherein two distinct solutions are obtained, which proceed to the cobalt and aluminum recovery steps.

33. Battery recycling process (100), **CHARACTERIZED in that** it comprises the following steps:
discharging the batteries (101) to be recycled, via resistance method, for energy recovery;
disassembling and separating the components of the battery (102), wherein the components are grouped as: electronic components and protective structure, as well as the battery cells;
grinding the battery cells (103), wherein the batteries are selected from LCO, NCA, NMC (111, 622, 532, 631, 811), LMO, LMO-NMC batteries, and combinations thereof, wherein the batteries are of the prismatic, cylindrical, pouch types, or combinations thereof, wherein the grinding is performed in a cooling fluid;
separating (104), from the ground material resulting from the grinding step (103), plastic parts with graphite and active material, wherein the plastic parts with graphite and active material are washed and sieved (115) to separate the graphite and active material, the graphite and active material proceeding to leaching, and the sieve used has a mesh size between 0.1 and 4 mm, in which the separation is free from heat treatment and decomposition of the materials;
precipitating fluorine (105) from the solution originating from the separation step (104) by adding Ca(OH)₂ or CaCl₂, wherein the precipitated fluorine is removed from the solution by filtration (116), using a filter with pores sized between 0.1 and 4 µm;
precipitating lithium (106) from the solution originating from the fluorine precipitation step (105) by adding Na₂CO₃, wherein the precipitated lithium is removed from the solution by filtration (117), using a filter with pores sized between 0.1 and 4 µm;
leaching with organic or inorganic acid (107) the solid originating from the grinding and physical separation step, in which leaching is free of reducing agent;
filtering the leached solution (108) to separate the leachate and solid material, using a filter with pores ranging from 0.1 to 4 µm;
separating the solid material (109) filtered in step (108);
submitting the organic or inorganic acid leach liquor from the previous step to a lithium separation step of the solution by electrodialysis with a monovalent membrane (122), in which electrodialysis is performed within a current range of 10 to 400 mA, with a current density of 0.1 mA/cm² to 25 mA/cm², and a reaction time of 20 to 160 hours, wherein the lithium-concentrated solution proceeds to the lithium recovery stage, and the remaining solution proceeds to a subsequent electrodialysis step;
submitting the solution exiting the lithium separation step by electrodialysis to complexation with ethylenediaminetetraacetic acid (EDTA), and subsequently proceed to a nickel separation step of the solution by electrodialysis with a cationic membrane, in a system with cationic and anionic membranes (123), in which electrodialysis is performed within a current range of 100 mA to 500 mA, with a current density of 1.0 mA/cm² to 31.25 mA/cm², and a reaction time of 20 to 160 hours, wherein the nickel-concentrated solution proceeds to the nickel recovery stage, and the remaining solution proceeds to a subsequent electrodialysis step;
submitting the solution exiting the nickel separation step by electrodialysis to complexation with ethylenediaminetetraacetic acid (EDTA), and subsequently proceed to a manganese separation step of the solution by electrodialysis with a cationic membrane, in a system with cationic and anionic membranes (124), in which electrodialysis is performed within a current range of 100 mA to 500 mA, with a current density of 1.0 mA/cm² to 31.25 mA/cm², and a reaction time of 20 to 160 hours, wherein the manganese-concentrated solution proceeds to the manganese recovery stage, and the remaining solution proceeds to a subsequent electrodialysis step; and
submitting the solution exiting the manganese separation step by electrodialysis to complexation with 1-hydroxyethane-1,1-diphosphonic acid (HEDP), and subsequently proceed to a cobalt and aluminum separation step of the solution by electrodialysis with a cationic membrane, in a system with cationic and anionic membranes (125), wherein the electrodialysis is performed within a current range of 100 mA to 500 mA, with a current density of 1.0 mA/cm² to 31.25 mA/cm², and a reaction time of 20 to 160 hours, and wherein two distinct solutions are obtained that proceed to the cobalt and aluminum recovery stages.

34. Battery recycling process (100), according to claim 32 or 33, **CHARACTERIZED in that**:
manganese is separated by filtration in the form of manganese oxide, using a filter with pores between 0.1 and 4 µm, or manganese is separated by precipitation with precipitation agents such as, for example, sodium hypochlorite, or by electrodeposition; and/or
Lithium recovery occurs by precipitation; and/or
Nickel recovery occurs by precipitation or electrodeposition; and/or
Cobalt recovery occurs by precipitation or electrodeposition; and/or
Aluminum recovery occurs by precipitation or electrodeposition.

35. Battery recycling process (100), according to claim 33, **CHARACTERIZED in that**:
Manganese is separated by precipitation using ozone, which can occur in batch reactors or in columns in a continuous system, at ozone gas flow rates from 0.2 L/min to 4.0 L/min, preferably 0.6 L/min to 2 L/min, within a temperature range of 10°C to 60°C, preferably 15°C to 35°C, producing MnO₂ precipitate; or by electrodeposition; and/or
Lithium recovery occurs by precipitation; and/or
Nickel recovery occurs by precipitation or electrodeposition; and/or
Cobalt recovery occurs by precipitation or electrodeposition; and/or
Aluminum recovery occurs by precipitation or electrodeposition.

36. Battery recycling process (100), according to claim 32 or 34, **CHARACTERIZED in that**:
the ozonation step consists of the direct injection of ozone into the leachate from the leaching outlet to react with manganese ions, with the ozone being generated from a generator and oxygen, the step being carried out in batch reactors or in columns in a continuous system, at ozone gas flow rates of 0.2 L/min to 3 L/min, preferably 0.6 L/min to 2 L/min, and at temperatures between 10°C and 60°C.

37. Battery recycling process (100), according to any one of the claims 32 to 36, **CHARACTERIZED in that**:
the lithium precipitation occurs in the form of Li₂SO₄, Li₃PO₄, Li₂CO₃, or LiOH, and is removed from the solution by filtration using a filter with pores ranging from 0.1 to 4 µm.

38. Battery recycling process (100), according to any one of the claims 32 to 37, **CHARACTERIZED in that**:
the lithium precipitation step is carried out by one of the following methods:
i) crystallizing the solution at a temperature between 80°C and 110°C, with a reaction time between 1.0 and 5.0 hours, to obtain lithium sulfate (Li₂SO₄);
ii) adding sodium phosphate (solid or in solution) to the solution under stirring, at a temperature between 25°C and 90°C, with a reaction time between 1.0 and 5.0 hours, to obtain lithium phosphate (Li₃PO₄);
iii) adding sodium carbonate to the solution under stirring, at a concentration between 50 g/L and 200 g/L, with temperature between 25°C and 90°C, reaction time between 1.0 and 5.0 hours, to obtain lithium carbonate (Li₂CO₃); or
iv) from the lithium carbonate obtained in iii), adding calcium hydroxide at a concentration between 0.2 g/L and 1.0 g/L, with temperature between 25°C and 90°C, reaction time between 1.0 and 5.0 hours, to obtain lithium hydroxide (LiOH).

39. Battery recycling process (100), according to any one of the claims 32 a 38, **CHARACTERIZED in that**:
after the lithium precipitation step, the solution undergoes a crystallization step to obtain sodium sulfate crystals, and the acid used in the leaching step is recovered for reuse in the leaching process.

## Amended claims

### Amended claims under Art. 19.1 PCT

1. Battery recycling process (100), **CHARACTERIZED in that** it comprises the following steps:
discharging the batteries (101) to be recycled;
disassembling and separating the components of the battery (102), wherein the components are grouped as: electronic components and protective structure, as well as the battery cells;
grinding the battery cells (103), wherein the grinding is carried out in a cooling fluid;
separating (104), from the ground material originating from the grinding step (103), plastic parts with graphite and active material, wherein the plastic parts with graphite and active material are washed and screened (115) to separate the graphite and active material, the graphite and active material proceed to leaching, and the screen used has a mesh size between 0.1 and 4 mm;
precipitating fluorine (105) from the solution originating from the separation step (104), with addition of Ca(OH)₂ or CaCl₂, wherein the precipitated fluorine is removed from the solution through filtration (116), using a filter with pores ranging from 0.1 to 4 µm;
precipitating lithium (106) from the solution originating from the fluorine precipitation step (105) by addition of Na₂CO₃, wherein the precipitated lithium is removed from the solution by filtration (117), using a filter with pores ranging from 0.1 to 4 µm;
leaching with acid or solid resulting from the grinding and physical separation step;
filtering the leachate solution (108) to separate the leachate liquor and solid material, using a filter with pores ranging from 0.1 to 4 µm;
separating the solid material (109) filtered in step (108);
treating by ozonation (110) the leach liquor from the output of step (108), for separation of manganese, the manganese being separated by filtration in the form of manganese oxide, using a filter with pores from 0.1 to 4 µm;
precipitating aluminum (111A) from the solution resulting from the ozonation step (110) by addition of Na₂CO₃ or NaOH, wherein the aluminum is precipitated in the form of aluminum oxide, aluminum hydroxide, or aluminum carbonate, and removed from the solution by filtration using a filter with pores ranging from 0.1 to 4 µm;
extracting cobalt by solvent extraction (112A) from the solution resulting from the aluminum precipitation step (111A) in three sub-steps:
a) using phosphinic acids such as bis(2,4,4-trimethylpentyl)phosphinic acid, di-(2-ethylhexyl)phosphoric acid, trialkylphosphine, phosphonic or phosphinic acid as extractants to generate two phases, one aqueous and one organic,
b) draining the aqueous phase, and
c) sending the organic phase to a re-extraction solution with H₂SO₄, in which cobalt is extracted as cobalt sulfate, which are then removed from the solution by filtration using a filter with pores ranging from 0.1 to 4 µm;
precipitating nickel (113) from the solution resulting from the cobalt solvent extraction step (112A) by adding Na2CO3 or NaOH, whereby nickel is precipitated as nickel oxide, nickel hydroxide, or nickel carbonate, and removed from the solution by filtration using a filter with pores ranging from 0.1 to 4 µm; and
precipitating the remaining lithium (114) from the solution resulting from the nickel precipitation step (113), wherein the remaining lithium is precipitated in the form of Li₂SO₄, Li₃PO₄, Li₂CO₃, or LiOH, and removed from the solution by filtration using a filter with pores ranging from 0.1 to 4 µm.

2. Battery recycling process (100), according to claim 1, **CHARACTERIZED in that**:
the process is applicable to LCO, NCA, NMC (111, 622, 532, 631, 811), LMO and LMO-NMC batteries of prismatic, cylindrical and pouch types.

3. Battery recycling process (100), according to claim 1 or 2, **CHARACTERIZED in that**:
the discharging step (101) is carried out in two discharging sub-steps, which enable the recovery of the electrical energy discharged from the batteries.

4. Battery recycling process (100), according to any one of the claims 1 to 3, **CHARACTERIZED in that**:
the unloading step (101) is carried out by resistance.

5. Battery recycling process (100), according to any one of the claims 1 to 4, **CHARACTERIZED in that**:
the grinding step (102) is performed using a shredder-type mill or a knife mill.

6. Battery recycling process (100), according to any one of the claims 1 to 5, **CHARACTERIZED in that**:
the grinding step (102) includes the constant addition of a cooling fluid, the battery cells are fed into the mill at intervals of 1 to 20 seconds between each batch, and the ground material has a particle size smaller than 50 mm.

7. Battery recycling process (100), according to any one of the claims 1 to 6, **CHARACTERIZED in that**:
the cooling fluid used in the grinding step (102) is water.

8. Battery recycling process (100), according to any one of the claims 1 to 7, **CHARACTERIZED in that**:
the separation step (104) is carried out by at least one of the following methods: decantation, centrifugation, or vibrating table.

9. Battery recycling process (100), according to any one of the claims 1 to 8, **CHARACTERIZED in that**:
the screen used in the separation step (104) has a mesh size between 1 and 2 mm.

10. Battery recycling process (100), according to any one of the claims 1 to 9, **CHARACTERIZED in that**:
in the fluorine precipitation step (105), the amount of Ca(OH)₂ or CaCl₂ added is between the stoichiometric amount and 20% excess, with a reaction time of up to 2.0 hours, at a temperature between 25°C and 90°C.

11. Battery recycling process (100), according to any one of the claims 1 to 10, **CHARACTERIZED in that**:
in the lithium precipitation step (106), the amount of Na₂CO₃ added is between the stoichiometric amount and 20% excess, with a reaction time of up to 2.0 hours, at a temperature between 20°C and 80°C, and with a lithium precipitation yield of 10%.

12. Battery recycling process (100), according to any one of the claims 1 to 11, **CHARACTERIZED in that**:
the acid used in the leaching step (107) is one selected from sulfuric acid, phosphoric acid, or citric acid.

13. Battery recycling process (100), according to any one of the claims 1 to 12, **CHARACTERIZED in that**:
the leaching step (107) is carried out without the presence of a reducing agent.

14. Battery recycling process (100), according to any one of the claims 1 to 13, **CHARACTERIZED in that**:
the leaching step (107) has an acid concentration ranging from 0.5 mol/L to 4.0 mol/L, preferably from 0.7 mol/L to 2 mol/L, a temperature between 25°C and 90°C, preferably from 60 to 90°, and a reaction time between 0.5 and 5.0 hours, preferably from 1 to 3 hours.

15. Battery recycling process (100), according to any one of the claims 1 to 14, **CHARACTERIZED in that**:
the solid material filtered in the filtration step of the leached solution (108) comprises graphite, remains of the battery's external structure, metallic copper sheets and metallic aluminum sheets.

16. Battery recycling process (100), according to any one of the claims 1 to 15, **CHARACTERIZED in that**:
the separation step (109) is carried out by at least one of the following methods: decantation, centrifugation, vibrating table, screening, and elutriation.

17. Battery recycling process (100), according to any one of the claims 1 to 16, **CHARACTERIZED in that**:
the screen used in the screening of the separation step (109) has a mesh size between 0.03 and 4.0 mm.

18. Battery recycling process (100), according to any one of the claims 1 to 17, **CHARACTERIZED in that**:
the screen used in the screening of the separation step (109) has a mesh size between 1.5 and 3.0 mm.

19. Battery recycling process (100), according to any one of the claims 1 to 18, **CHARACTERIZED in that**:
the elutriation in the separation step (109) is carried out in a conventional elutriator.

20. Battery recycling process (100), according to any one of the claims 1 to 19, **CHARACTERIZED in that**:
the ozonation step (110) consists of the direct injection of ozone into the leach liquor exiting step (108) to react with manganese ions, the ozone being generated from a generator using oxygen, step (110) is carried out in batch reactors or continuous system columns, with ozone gas flow rates between 0.2 L/min and 3 L/min, preferably 0.6 L/min to 2 L/min, at temperatures between 10°C and 60°C, preferably 15°C to 35°C.

21. Battery recycling process (100), according to any one of the claims 1 to 20, **CHARACTERIZED in that**:
the aluminum precipitation step (111A) is carried out at a pH range between 3.0 and 5.0, a temperature between 25°C and 80°C, and a reaction time between 0.5 and 3.0 hours.

22. Battery recycling process (100), according to any one of the claims 1 to 21, **CHARACTERIZED in that**:
the cobalt solvent extraction step (112A) is carried out using phosphinic acid in countercurrent with an aqueous-to-organic phase ratio between 1/5 and 5/1, with a phosphinic acid concentration between 5% and 25% v/v, at a temperature between 25°C and 60°C, to obtain a cobalt sulfate solution.

23. Battery recycling process (100), according to any one of the claims 1 to 22, **CHARACTERIZED in that** it:
the nickel precipitation step (113) is carried out at a pH range between 5.0 and 9.0, a temperature between 25°C and 80°C, and a reaction time between 0.5 and 3.0 hours.

24. Battery recycling process (100), according to any one of the claims 1 to 23, **CHARACTERIZED in that** it:
the remaining lithium precipitation step (114) is carried out by one of the following methods:
i) crystallizing the solution resulting from the nickel precipitation step (113) at a temperature between 80°C and 110°C, with a reaction time between 1.0 and 5.0 hours, to obtain lithium sulfate (Li₂SO₄);
ii) adding sodium phosphate (solid or in solution) to the solution under agitation, at a temperature between 25°C and 90°C, with a reaction time between 1.0 and 5.0 hours, to obtain lithium phosphate (Li₃PO₄);
iii) adding sodium carbonate to the solution under agitation, at a concentration between 50 g/L and 200 g/L, with a temperature between 25°C and 90°C, and a reaction time between 1.0 and 5.0 hours, to obtain lithium carbonate (Li₂CO₃); or
iv) from the lithium carbonate obtained in item iii), adding calcium hydroxide at a concentration between 0.2 g/L and 1.0 g/L, with a temperature between 25°C and 90°C, and a reaction time between 1.0 and 5.0 hours, to obtain lithium hydroxide (LiOH).

25. Battery recycling process (100), according to any one of the claims 1 to 24, **CHARACTERIZED in that** it further comprises:
the aluminum separation step from the solution by electrodialysis (111B) being performed using a cationic membrane, where electrodialysis is carried out within a current range of 200 mA to 400 mA and a reaction time of up to 30 hours, and wherein the aluminum-concentrated solution proceeds to the aluminum precipitation step (111A), while the remaining solution proceeds to the cobalt extraction by solvent step (112A).

26. Battery recycling process (100), according to any one of the claims 1 to 25, **CHARACTERIZED in that** it further comprises:
adding sodium oxalate (Na₂C₂O₄) or oxalic acid (H₂C₂O₄) in an amount between the stoichiometric quantity and 20% excess to the cobalt sulfate solution obtained from the cobalt extraction by solvent step (112A) to obtain cobalt oxalate precipitated in a 1:1 molar ratio;
subsequently, subjecting the cobalt oxalate solution to a calcination step to obtain cobalt oxide and, optionally, adding Na₂CO₃ in an amount between the stoichiometric quantity and 20% excess, within a pH range of 6.0 to 10.0, reaction time between 0.5 and 3.0 hours, and temperature between 25°C and 80°C, to obtain cobalt carbonate; or
subjecting the solution to electrolysis to obtain cobalt in metallic form,
where the cobalt oxide, cobalt carbonate, and metallic cobalt are removed from the solution by filtration, using a filter with pores ranging from 0.1 to 4 µm.

27. Battery recycling process (100), according to any one of the claims 1 to 26, **CHARACTERIZED in that** it further comprises:
in the filtration to remove cobalt oxide, cobalt carbonate, and metallic cobalt from the solution, the filter used having pores ranging from 1 to 2 µm.

28. Battery recycling process (100), according to any one of the claims 1 to 27, **CHARACTERIZED in that**:
after the residual lithium precipitation step (114), the solution undergoes a crystallization step to obtain sodium sulfate crystals, and the acid used in the leaching is recovered for reuse in the leaching step.

29. Battery recycling process (100), according to any one of the claims 1 to 28, **CHARACTERIZED in that**:
in the fluorine precipitation (105), lithium precipitation (106), leaching (107), leachate solution filtration (108), ozonation (110), aluminum precipitation (111A), cobalt solvent extraction (112A), nickel precipitation (113), and residual lithium precipitation (114) steps, the filter used has pores ranging from 1 to 2 µm.

30. Battery recycling process (100), according to any one of the claims 1 to 29, **CHARACTERIZED in that**:
the filters used are of the paper or membrane type.

31. Battery recycling process (100), **CHARACTERIZED in that** it comprises the following steps:
discharging the batteries (101) to be recycled;
disassembling and separating the components of the battery (102), wherein the components are grouped as: electronic components and protective structure, as well as the battery cells;
grinding the battery cells (103), wherein the grinding is carried out in a coolant fluid;
separating (104), from the ground material obtained in the grinding step (103), plastic parts with graphite and active material, wherein the plastic parts with graphite and active material are washed and screened (115) for the separation of the graphite and active material, the graphite and active material proceeding to leaching, and the screen used has a mesh size between 0.1 and 4 mm;
precipitating fluorine (105) from the solution obtained from the separation step (104) by adding Ca(OH)₂ or CaCl₂, wherein the precipitated fluorine is removed from the solution through filtration (116), using a filter with pores ranging from 0.1 to 4 µm;
precipitating lithium (106) from the solution obtained from the fluorine precipitation step (105) by adding Na₂CO₃, wherein the precipitated lithium is removed from the solution through filtration (117), using a filter with pores ranging from 0.1 to 4 µm;
leaching with an acid, the solid obtained from the grinding and physical separation step;
filtering the leach solution (108) to separate leach liquor and solid material, using a filter with pores ranging from 0.1 to 4 µm;
separating the solid material (109) filtered in step (108);
precipitating aluminum (111A) from the solution obtained in the leaching step (108) by adding Na₂CO₃ or NaOH, wherein the aluminum is precipitated in the form of aluminum oxide, aluminum hydroxide, or aluminum carbonate, and is removed from the solution by filtration using a filter with pore sizes ranging from 0.1 to 4 µm;
extracting cobalt and manganese by solvent extraction (112B) from the solution obtained in the aluminum precipitation step (111A) in six sub-steps:
- 112B.1) extracting cobalt and manganese from the solution using phosphinic acids such as bis(2,4,4-trimethylpentyl)phosphinic acid, di-(2-ethylhexyl)phosphoric acid, trialkylphosphine, phosphonic or phosphinic acids, generating two phases-an aqueous phase and an organic phase-the aqueous phase being drained,
- 112B.2) re-extracting cobalt and manganese from the organic phase of sub-step 112B.1) using H₂SO₄, whereby cobalt is extracted as cobalt sulfate and manganese is extracted as manganese sulfate in the aqueous phase,
- 112B.3) extracting manganese from the solution resulting from sub-step 112B.2) using phosphinic acids such as bis(2,4,4-trimethylpentyl)phosphinic acid, di-(2-ethylhexyl)phosphoric acid, trialkylphosphine, phosphonic or phosphinic acids, generating two phases: an aqueous phase containing cobalt and an organic phase containing manganese, with the aqueous cobalt phase directed to cobalt precipitation,
- 112B.4) re-extracting manganese from the organic phase solution of sub-step 112B.3) with H₂SO₄, whereby manganese is extracted as manganese sulfate in the aqueous phase,
- 112B.5) precipitating manganese from the aqueous phase of sub-step 112B.4) using one of the agents Na₂CO₃, NaOH, Na₂C₂O₄, or H₂C₂O₄, whereby manganese is precipitated as manganese hydroxide, manganese oxalate, or manganese carbonate, and removed from the solution by filtration through a filter with pores ranging from 0.1 to 4 µm, and
- 112B.6) precipitating cobalt from the aqueous phase of the solution in sub-step 112B.3) using one of the agents Na₂CO₃, C₂H₂O₄ (oxalic acid), Na₂C₂O₄ (sodium oxalate), or NaOH, whereby cobalt is precipitated as cobalt hydroxide, cobalt oxalate, or cobalt carbonate, and removed from the solution by filtration through a filter with pores ranging from 0.1 to 4 µm;
precipitating nickel (113) from the solution resulting from the cobalt and manganese solvent extraction step (112B) by addition of Na₂CO₃ or NaOH, whereby nickel is precipitated as nickel oxide, nickel hydroxide, or nickel carbonate, and removed from the solution by filtration through a filter with pores ranging from 0.1 to 4 µm; and
precipitating the remaining lithium (114) from the solution resulting from the nickel precipitation step (113), wherein the remaining lithium is precipitated as Li₂SO₄, Li₃PO₄, Li₂CO₃, or LiOH, and removed from the solution by filtration using a filter with pores ranging from 0.1 to 4 µm.

32. Battery recycling process (100), according to claim 31, **CHARACTERIZED in that** it further comprises:
a separation step of aluminum from the solution by electrodialysis (111B) with a cationic membrane, in which the electrodialysis is carried out within a current range of 200 mA to 400 mA and a reaction time of up to 30 hours, and in which the aluminum-concentrated solution proceeds to the aluminum precipitation step (111A), while the remaining solution proceeds to the cobalt and manganese solvent extraction step (112).

33. Battery recycling process (100), according to claim 31 or 32, **CHARACTERIZED in that**:
the extraction sub-steps (112B.1) and (112B.3) are carried out within a temperature range of 25°C to 60°C, in countercurrent, with an aqueous-to-organic phase ratio between 1:5 and 5:1, and with a concentration of phosphinic acids between 5% and 25% v/v,
the re-extraction sub-steps (112B.2) and (112B.4) are carried out within a temperature range of 25°C to 60°C, in countercurrent, with an aqueous-to-organic phase ratio between 1:5 and 5:1, and with an H₂SO₄ concentration between 0.1 mol/L and 5.0 mol/L, and
the precipitation sub-steps of manganese (112B.5) and cobalt (112B.6) are carried out with the agents added in amounts ranging from stoichiometric to 20% excess, within a pH range of 6.0 to 10.0, reaction times between 0.5 and 3.0 hours, and temperatures between 25°C and 80°C.

34. Battery recycling process (100), according to any one of the claims 31 to 33, **CHARACTERIZED in that**:
manganese oxalate and cobalt oxalate undergo a calcination step at temperatures between 400°C and 800°C to obtain cobalt oxide and manganese oxide.

35. Battery recycling process (100), **CHARACTERIZED in that** it comprises the following steps:
discharging the batteries (101) to be recycled;
disassembling and separating the components of the battery (102), wherein the components are grouped as: electronic components and protective structure, as well as the battery cells;
grinding the battery cells (103), wherein the grinding is performed in a cooling fluid;
separating (104), from the ground material resulting from the grinding step (103), plastic parts with graphite and active material, wherein the plastic parts with graphite and active material are washed and screened (115) to separate the graphite and active material, the graphite and active material proceed to leaching, and the screen used has a mesh size between 0.1 and 4 mm;
precipitating fluorine (105) from the solution resulting from separation step (104) by addition of Ca(OH)₂ or CaCl₂, wherein the precipitated fluorine is removed from the solution by filtration (116), using a filter with pores between 0.1 and 4 µm;
precipitating lithium (106) from the solution resulting from the fluorine precipitation step (105) by addition of Na₂CO₃, wherein the precipitated lithium is removed from the solution by filtration (117), using a filter with pores between 0.1 and 4 µm;
leaching with acid (107) the solid material resulting from the grinding and physical separation step;
filtering the leached solution (108) to separate the leachate liquor and solid material, using a filter with pores ranging from 0.1 to 4 µm;
separating the solid material (109) filtered in step (108);
treating by ozonation (118) the leach liquor from the output of the previous step for separation of manganese,
submitting the solution exiting the ozonation treatment to a lithium separation step (119) by electrodialysis using a monovalent membrane, wherein the electrodialysis is performed within a current range of 10 to 400 mA, with a current density from 0.1 mA/cm² to 25 mA/cm², and a reaction time of 20 to 160 hours, wherein the lithium-concentrated solution proceeds to the lithium recovery step, and the remaining solution proceeds to a subsequent electrodialysis step;
submitting the solution exiting the lithium separation step by electrodialysis to complexation with ethylenediaminetetraacetic acid (EDTA), and subsequently proceed to a nickel separation step by electrodialysis using a cationic membrane in a system with cationic and anionic membranes (120), wherein the electrodialysis is performed within a current range of 100 mA to 500 mA, with a current density from 1.0 mA/cm² to 31.25 mA/cm², and a reaction time of 20 to 160 hours; wherein the nickel-concentrated solution proceeds to the recovery step, and the remaining solution proceeds to a subsequent electrodialysis step; and
submitting the solution exiting the nickel separation step by electrodialysis to complexation with 1-hydroxyethane-1,1-diphosphonic acid (HEDP), and subsequently proceed to a cobalt and aluminum separation step by electrodialysis using a cationic membrane in a system with cationic and anionic membranes (121), wherein the electrodialysis is performed within a current range of 100 mA to 500 mA, with a current density from 1.0 mA/cm² to 31.25 mA/cm², and a reaction time of 20 to 60 hours; and wherein two distinct solutions are obtained, which proceed to the cobalt and aluminum recovery steps.

36. Battery recycling process (100), **CHARACTERIZED in that** it comprises the following steps:
discharging the batteries (101) to be recycled;
disassembling and separating the components of the battery (102), wherein the components are grouped as: electronic components and protective structure, as well as the battery cells;
grinding the battery cells (103), wherein the grinding is performed in a cooling fluid;
separating (104), from the ground material resulting from the grinding step (103), plastic parts with graphite and active material, wherein the plastic parts with graphite and active material are washed and sieved (115) to separate the graphite and active material, the graphite and active material proceeding to leaching, and the sieve used has a mesh size between 0.1 and 4 mm;
precipitating fluorine (105) from the solution originating from the separation step (104) by adding Ca(OH)₂ or CaCl₂, wherein the precipitated fluorine is removed from the solution by filtration (116), using a filter with pores sized between 0.1 and 4 µm;
precipitating lithium (106) from the solution originating from the fluorine precipitation step (105) by adding Na₂CO₃, wherein the precipitated lithium is removed from the solution by filtration (117), using a filter with pores sized between 0.1 and 4 µm;
leaching with acid (107) the solid originating from the grinding and physical separation step;
filtering the leached solution (108) to separate the leachate and solid material, using a filter with pores ranging from 0.1 to 4 µm;
separating the solid material (109) filtered in step (108);
submitting the leach liquor from the previous step to a lithium separation step of the solution by electrodialysis with a monovalent membrane (122), in which electrodialysis is performed within a current range of 10 to 400 mA, with a current density of 0.1 mA/cm² to 25 mA/cm², and a reaction time of 20 to 160 hours, wherein the lithium-concentrated solution proceeds to the lithium recovery stage, and the remaining solution proceeds to a subsequent electrodialysis step;
submitting the solution exiting the lithium separation step by electrodialysis to complexation with ethylenediaminetetraacetic acid (EDTA), and subsequently proceed to a nickel separation step of the solution by electrodialysis with a cationic membrane, in a system with cationic and anionic membranes (123), in which electrodialysis is performed within a current range of 100 mA to 500 mA, with a current density of 1.0 mA/cm² to 31.25 mA/cm², and a reaction time of 20 to 160 hours, wherein the nickel-concentrated solution proceeds to the nickel recovery stage, and the remaining solution proceeds to a subsequent electrodialysis step;
submitting the solution exiting the nickel separation step by electrodialysis to complexation with ethylenediaminetetraacetic acid (EDTA), and subsequently proceed to a manganese separation step of the solution by electrodialysis with a cationic membrane, in a system with cationic and anionic membranes (124), in which electrodialysis is performed within a current range of 100 mA to 500 mA, with a current density of 1.0 mA/cm² to 31.25 mA/cm², and a reaction time of 20 to 160 hours, wherein the manganese-concentrated solution proceeds to the manganese recovery stage, and the remaining solution proceeds to a subsequent electrodialysis step; and
submitting the solution exiting the manganese separation step by electrodialysis to complexation with 1-hydroxyethane-1,1-diphosphonic acid (HEDP), and subsequently proceed to a cobalt and aluminum separation step of the solution by electrodialysis with a cationic membrane, in a system with cationic and anionic membranes (125), wherein the electrodialysis is performed within a current range of 100 mA to 500 mA, with a current density of 1.0 mA/cm² to 31.25 mA/cm², and a reaction time of 20 to 160 hours, and wherein two distinct solutions are obtained that proceed to the cobalt and aluminum recovery stages.

37. Battery recycling process (100), according to claim 35 or 36, **CHARACTERIZED in that**:
it comprises the features defined in any one of claims 2 to 19.

38. Battery recycling process (100), according to claim 35 or 37, **CHARACTERIZED in that**:
manganese is separated by filtration in the form of manganese oxide, using a filter with pores between 0.1 and 4 µm, or manganese is separated by precipitation with precipitation agents such as, for example, sodium hypochlorite, or by electrodeposition; and/or
Lithium recovery occurs by precipitation; and/or
Nickel recovery occurs by precipitation or electrodeposition; and/or
Cobalt recovery occurs by precipitation or electrodeposition; and/or
Aluminum recovery occurs by precipitation or electrodeposition.

39. Battery recycling process (100), according to claim 36 or 37, **CHARACTERIZED in that**:
Manganese is separated by precipitation using ozone, which can occur in batch reactors or in columns in a continuous system, at ozone gas flow rates from 0.2 L/min to 4.0 L/min, preferably 0.6 L/min to 2 L/min, within a temperature range of 10°C to 60°C, preferably 15°C to 35°C, producing MnO₂ precipitate; or by electrodeposition; and/or
Lithium recovery occurs by precipitation; and/or
Nickel recovery occurs by precipitation or electrodeposition; and/or
Cobalt recovery occurs by precipitation or electrodeposition; and/or
Aluminum recovery occurs by precipitation or electrodeposition.

40. Battery recycling process (100), according to claim 35, 37 or 38, **CHARACTERIZED in that**:
the ozonation step consists of the direct injection of ozone into the leachate from the leaching outlet to react with manganese ions, with the ozone being generated from a generator and oxygen, the step being carried out in batch reactors or in columns in a continuous system, at ozone gas flow rates of 0.2 L/min to 3 L/min, preferably 0.6 L/min to 2 L/min, and at temperatures between 10°C and 60°C.

41. Battery recycling process (100), according to any one of the claims 35 to 40, **CHARACTERIZED in that**:
the lithium precipitation occurs in the form of Li₂SO₄, Li₃PO₄, Li₂CO₃, or LiOH, and is removed from the solution by filtration using a filter with pores ranging from 0.1 to 4 µm.

42. Battery recycling process (100), according to any one of the claims 35 to 41, **CHARACTERIZED in that**:
the lithium precipitation step is carried out by one of the following methods:
i) crystallizing the solution at a temperature between 80°C and 110°C, with a reaction time between 1.0 and 5.0 hours, to obtain lithium sulfate (Li₂SO₄);
ii) adding sodium phosphate (solid or in solution) to the solution under stirring, at a temperature between 25°C and 90°C, with a reaction time between 1.0 and 5.0 hours, to obtain lithium phosphate (Li₃PO₄);
iii) adding sodium carbonate to the solution under stirring, at a concentration between 50 g/L and 200 g/L, with temperature between 25°C and 90°C, reaction time between 1.0 and 5.0 hours, to obtain lithium carbonate (Li₂CO₃); or
iv) from the lithium carbonate obtained in iii), adding calcium hydroxide at a concentration between 0.2 g/L and 1.0 g/L, with temperature between 25°C and 90°C, reaction time between 1.0 and 5.0 hours, to obtain lithium hydroxide (LiOH).

43. Battery recycling process (100), according to any one of the claims 35 a 42, **CHARACTERIZED in that**:
after the lithium precipitation step, the solution undergoes a crystallization step to obtain sodium sulfate crystals, and the acid used in the leaching step is recovered for reuse in the leaching process.
